# EUROPEAN PATENT SPECIFICATION

(11) **EP 4 111 839 B1**
(45) Date of publication and mention of the grant of the patent: **13.11.2024**
(21) Application number: 22180250.7
(22) Date of filing: 21.06.2022
(51) Int. Cl.: A01B 69/00, A01B 69/04, B60Q 1/14

(54) **AGRICULTURAL MACHINE, AND DEVICE AND METHOD FOR CONTROLLING AGRICULTURAL MACHINE**
LANDWIRTSCHAFTLICHE MASCHINE SOWIE VORRICHTUNG UND VERFAHREN ZUM STEUERN EINER LANDWIRTSCHAFTLICHEN MASCHINE
MACHINE AGRICOLE, ET SYSTÈME ET PROCÉDÉ DE COMMANDE DE MACHINE AGRICOLE

(30) Priority: 29.06.2021 JP 2021107443
(43) Date of publication of application: 04.01.2023
(73) Proprietor: Kubota Corporation, Osaka 556-8601 (JP)
(72) Inventor: SAKAGUCHI, Kazuo, SAKAI-SHI, OSAKA, 590-0823 (JP); TAMATANI, Kenji, SAKAI-SHI, OSAKA, 590-0823 (JP); TAKAHASHI, Yusuke, SAKAI-SHI, OSAKA, 590-0823 (JP)
(74) Representative: Cabinet Beau de Loménie

(56) References cited:
- EP-A1- 2 158 799
- WO-A1-2020/137752
- JP-A- 2020 175 800
- US-A1- 2017 364 629
- US-A1- 2018 332 760
- US-A1- 2019 392 239

## Description

### CROSS-REFERENCE TO RELATED APPLICATION

### BACKGROUND OF THE INVENTION

### 1. Field of the Invention

The present disclosure relates to an agricultural machine, and a device and method for controlling an agricultural machine.

### 2. Description of the Related Art

Research and development has been directed to the automation of agricultural machines to be used in agricultural fields. For example, work vehicles, such as tractors, combines, and rice transplanters, which automatically travel within fields by utilizing a positioning system, e.g., a GNSS (Global Navigation Satellite System), are coming into practical use. Research and development is also under way for work vehicles which automatically travel not only within fields, but also outside the fields (including public roads).

Japanese Laid-Open Patent Publication No. 2020-103091 discloses an example of a work vehicle that performs self-traveling along an intended travel path. The work vehicle disclosed in Japanese Laid-Open Patent Publication No. 2020-103091 controls multiple lights as appropriate during self-traveling, such that a remote supervisor is able to check for the presence or absence of obstacles, etc., on an intended travel path with certainty. For example, before the work vehicle turns around, based on the intended travel path, a controller in the work vehicle may activate some of the lights that will provide illumination in the direction in which the vehicle is going to move after the turnaround. Moreover, when the clarity of images taken by a camera which is mounted on the work vehicle is low, the controller may select some of the lights for providing illumina tion in the direction in which the camera captures images. Furthermore, based on an illuminance that is measured with an illuminance sensor, the controller may predict the image quality of an image to be taken by the camera, and select a lighting pattern so that the predicted image quality will satisfy a predetermined condition for achieving an image that will sufficiently allow the imaged object to be recognized. Document EP 2 158 799 A1 describes another known agricultural machine configured to perform self-driving.

### SUMMARY OF THE INVENTION

From monitoring and other standpoints, conventional illumination control techniques for agricultural machines that perform self-driving have been developed in terms of how to effectively illuminate the surroundings of an agricultural machine.

Preferred embodiments of the present invention provide illumination control techniques each of which is more efficient than conventional and reduces power consumption.

An agricultural machine according to the invention is an agricultural machine according to claim 2.

A controller according to the invention is a controller according to claim 1.

A method according to the invention is a method according to claim 13.

General or specific aspects of various example preferred embodiments of the present disclosure may be implemented using a device, a system, a method, an integrated circuit, a computer program, a non-transitory computer-readable storage medium, or any combination thereof. The computer-readable storage medium may be inclusive of a volatile storage medium, or a nonvolatile storage medium. The device may include a plurality of devices. In the case where the device includes two or more devices, the two or more devices may be disposed within a single apparatus, or divided over two or more separate apparatuses.

According to preferred embodiments of the present disclosure, it is possible to enhance the efficiency of illumination control, and reduce the power consumption, of an agricultural machine that performs self-driving at nighttime.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. **1** is a diagram providing an overview of a system according to an illustrative preferred embodiment of the present invention.
FIG. **2** is a side view schematically showing the work vehicle and an example of an implement that is linked to the work vehicle.
FIG. **3** is a block diagram showing an example configuration of the work vehicle, the implement, and a monitoring terminal.
FIG. **4** is a conceptual diagram showing an example work vehicle which performs positioning based on an RTK-GNSS.
FIG. **5** is a schematic diagram showing an example of an operational terminal and operation switches.
FIG. **6A** is a diagram showing an example of a plurality of illumination devices provided at the front of a work vehicle.
FIG. **6B** is a diagram showing an example of a plurality of illumination devices provided at the rear of a work vehicle.
FIG. **7** is a diagram schematically showing an example of a work vehicle automatically traveling along a target path in a field.
FIG. **8** is a flowchart showing an example operation of steering control to be performed by a controller during self-driving.
FIG. **9A** is a diagram showing an example of a work vehicle that travels along a target path **P.**
FIG. **9B** is a diagram showing an example of a work vehicle at a position which is shifted rightward from the target path **P.**
FIG. **9C** is a diagram showing an example of a work vehicle at a position which is shifted leftward from the target path **P.**
FIG. **9D** is a diagram showing an example of a work vehicle which is oriented in an inclined direction with respect to the target path **P.**
FIGS. **10A to 10C** are diagrams schematically illustrating illumination control and an example operation upon detecting an obstacle.
FIG. **11** is a flowchart showing an example operation of the controller.
FIG. **12** is a flowchart showing an example of illumination control based on measurement values of illuminance sensors.
FIG. **13** is a flowchart showing an example of illumination control based on a measurement value of a clocking device.
FIG. **14** is a diagram schematically showing different kinds of illumination control being performed within a field and outside the field.
FIG. **15** is a flowchart showing an example operation of a controller which performs different kinds of illumination control within a field and outside the field, respectively.
FIG. **16** is a diagram showing an example of a work vehicle including a LiDAR sensor.
FIG. **17** is a block diagram showing an example configuration of a work vehicle including a LiDAR sensor.
FIG. **18** is a diagram schematically showing the configuration of a system in which a processing unit that communicates with the work vehicle via a network generates a target path.
FIG. **19** is a block diagram showing a configuration for the processing unit.

### DETAILED DESCRIPTION OF THE PREFERRED EMBODIMENTS

Hereinafter, preferred embodiments of the present disclosure will be described more specifically. Note however that unnecessarily detailed descriptions may be omitted. For example, detailed descriptions on what is well known in the art or redundant descriptions on what is substantially the same configuration may be omitted. This is to avoid lengthy description, and facilitate the understanding of those skilled in the art. The accompanying drawings and the following description, which are provided by the present inventors so that those skilled in the art can sufficiently understand the present disclosure, are not intended to limit the scope of claims. In the following description, component elements having identical or similar functions are denoted by identical reference numerals.

The following preferred embodiments are only exemplary, and the technique according to the present disclosure is not limited to the following preferred embodiments. For example, numerical values, shapes, materials, steps, and orders of steps, layout of a display screen, etc., that are indicated in the following preferred embodiments are only exemplary, and admit of various modifications so long as it makes technological sense. Any one implementation may be combined with another so long as it makes technological sense to do so.

First, an overview of a preferred embodiment of the present disclosure will be described.

An agricultural machine according to a preferred embodiment of the present disclosure is an agricultural machine to perform self-driving, including one or more illumination devices to illuminate surroundings of the agricultural machine in a traveling direction thereof, and a controller to control self-driving while keeping at least one of the one or more illumination devices deactivated at nighttime.

In the present disclosure, an "agricultural machine" means a machine for agricultural applications. Examples of agricultural machines include tractors, harvesters, rice transplanters, vehicles for crop management, vegetable transplanters, mowers, seeders, spreaders, and mobile robots for agriculture. Not only may a work vehicle (such as a tractor) function as an "agricultural machine" alone by itself, but also an implement that is attached to or towed by a work vehicle may together in combination with the work vehicle function as an "agricultural machine". For the ground surface within a field, an agricultural machine performs agricultural work such as tilling, seeding, preventive pest control, manure spreading, planting of crops, or harvesting. Such agricultural work or tasks may be referred to as "groundwork", or simply as "work" or "tasks". The travel of a vehicle-type agricultural machine performed while the machine also performs agricultural work may be referred to as "tasked travel".

As used herein, "self-driving" means controlling the movement of an agricultural machine by the action of a controller, rather than through manual operations of a driver. An agricultural machine that performs self-driving may be referred to as a "self-driving agricultural machine" or a "robotic agricultural machine". During self-driving, not only the movement of the agricultural machine, but also the operation of agricultural work may also be controlled automatically. In the case where the agricultural machine is a vehicle-type machine, traveling of the agricultural machine via self-driving will be referred to as "self-traveling". The controller may be configured or programmed to control at least one of: steering that is required in the movement of the agricultural machine; adjustment of the moving speed; and beginning and ending a move. In the case of controlling a work vehicle having an implement attached thereto, the controller may be configured or programmed to control raising or lowering of the implement, beginning and ending of an operation of the implement, and so on. A move based on self-driving may include not only moving of an agricultural machine that goes along a predetermined path toward a destination, but also moving of an agricultural machine that follows a target of tracking. An agricultural machine that performs self-driving may also have the function of moving partly based on the user's instructions. Moreover, an agricultural machine that performs self-driving may operate not only in a self-driving mode but also in a manual driving mode, where the agricultural machine moves through manual operations of the driver. When performed not manually but through the action of a controller, the steering of an agricultural machine will be referred to as "automatic steering" . A part or a whole of the controller may reside outside the agricultural machine. Control signals, commands, data, etc., may be communicated between the agricultural machine and a controller residing outside the agricultural machine. An agricultural machine that performs self-driving may move autonomously while sensing the surrounding environment, without any person being involved in the controlling of the movement of the agricultural machine. An agricultural machine that is capable of autonomous movement is able to travel within the field or outside the fields (e.g., on roads) in an unmanned manner. During an autonomous move, operations of detecting and avoiding obstacles may be performed.

An "illumination device" is a device that includes one or more light sources. The illumination device is controlled by a controller. The agricultural machine may include a plurality of illumination devices. For example, various illumination devices, e.g., headlights, work lights, side lights, taillights, brake lights, back-up lights, and number lights, may be provided on an agricultural machine. Among such illumination devices, the below-described control is performed for at least one or more illumination devices that illuminate the surroundings of the agricultural machine in a traveling direction of the agricultural machine. In the following description, the entirety of a plurality of illumination devices may be referred to as an "illumination system".

In the meaning of the present disclosure, a state of "deactivation", being "deactivated", etc., encompasses not only a state of being completely deactivated, but also a state of low illuminance which is substantially equivalent to deactivation. For example, in the one or more illumination devices, an illuminance of about 0.001 lux (lx) or less corresponds to deactivation.

In the above configuration, at nighttime, the controller controls self-driving while keeping deactivated at least one of the illumination devices that illuminate the surroundings of the agricultural machine in a traveling direction thereof. As used herein, to "control self-driving while keeping an illumination device deactivated" means controlling self-driving under the following conditions: if the illumination device is in an activated state, the illumination device is placed in a deactivated state; and if the illumination device is in a deactivated state, that state is maintained. Herein, "at nighttime" means the duration of time from sundown to sunrise.

Through the above control, the agricultural machine is able to move within a field via self-driving, while keeping the aforementioned illumination device(s) deactivated at nighttime. Conventional illumination control techniques were based on the common technological knowledge that the surroundings of the agricultural machine need to be brightly lit with an illumination device(s) during self-driving, from the standpoint of monitoring the agricultural machine and letting anyone in the surroundings of the agricultural machine know of the presence of the agricultural machine. On the other hand, an agricultural machine according to the present preferred embodiment performs agricultural work while moving in an unmanned manner mainly within a field that contains no humans in the surroundings. In such an environment, it is not necessary to activate the illumination devices at nighttime. Rather, activating the illumination devices at nighttime may result in increased power consumption, or attracting insects. The inventors have developed the concept that, in the case where the agricultural machine is self-driving in an area which is usually not entered by people, or where the agricultural machine has the function of detecting humans or other obstacles and coming to a halt, the surroundings of the agricultural machine do not need to be brightly lit by illumination devices. Based on this concept, the controller according to the present preferred embodiment is configured or programmed to control self-driving while keeping deactivated at least one illumination device (e.g., all illumination devices) that illuminate the agricultural machine in its traveling direction at nighttime. As a result, power consumption can be reduced, and insects can be prevented from being attracted, among other favorable effects.

The controller may be configured or programmed to, when beginning to control self-driving while the at least one of the illumination devices is activated, deactivate the at least one of the illumination devices. The agricultural machine may include a switch to manually switch between activation and deactivation of each of the one or more illumination devices. In that case, irrespective of whether the switch is in an ON state or an OFF state, the controller deactivates the at least one of the illumination devices when beginning self-driving. In other words, even if the switch for the illumination device (s) is ON, i.e., set in an activated state, the controller forces that illumination device(s) to be deactivated when beginning self-driving. With such a configuration, even if the illumination device is set to be activated at the beginning of self-driving, the illumination device can be automatically deactivated, thereby providing effects such as reduction in power consumption.

By transmitting a control signal to a drive device (e.g., a prime mover, a transmission, or a steering device) included in the agricultural machine, the controller controls self-driving. The controller may cause the agricultural machine to move along a previously-set target path, for example. The target path may be set not only within a field, but also on public roads outside the field. In that case, the agricultural machine is able to move on public roads via self-driving. The controller may be an ECU or any other device that is included in the agricultural machine, or, an external computer (e.g., a server) that communicates with the agricultural machine may perform a part of the functionality of the controller.

The controller may perform the aforementioned control of restricting illumination light only at nighttime, or perform the control also during the hours other than nighttime. The determination as to whether it is nighttime or not may be made based on at least one of: a point of time measured by a clocking device; and a measurement value by an illuminance sensor, for example. The controller may keep at least one of the illumination devices deactivated if a point of time acquired from the clocking device is a point of time corresponding to nighttime when self-driving is being controlled. Alternatively, the controller may keep at least one of the illumination devices deactivated if an illuminance measured by an illuminance sensor included in the agricultural machine is equal to or less than a threshold when self-driving is being controlled. Alternatively, the controller may determine whether it is nighttime or not based on both a point of time acquired from the clocking device and a measurement value of the illuminance sensor. In the case where the illuminance sensor is used, the aforementioned control may be implemented by a circuit in which a switch on a transmission line that powers the illumination device is automatically turned OFF when a measurement value by the illuminance sensor becomes equal to or less than the threshold.

The controller may perform the aforementioned control of restricting illumination only when the agricultural machine performs self-driving in a field. For example, the controller may perform the following operations of (S1) to (S3) when controlling self-driving at nighttime:
(S1) determining whether a position measured by a positioning device is in a first region that contains a field or in a second region that contains a public road;
(S2) when determining that the agricultural machine is in the first region, controlling self-driving in a deactivation mode of keeping the at least one of the illumination devices deactivated; and
(S3) when determining that the agricultural machine is in the second region, controlling self-driving in an activation mode of keeping the at least one of the illumination devices activated.

Through such an operation, effects such as reduction in power consumption can be obtained within the field, whereas self-traveling on public roads can be performed with a required luminous intensity from the illumination device(s).

The agricultural machine performing self-driving may include a sensing device to detect an obstacle. The sensing device may include an obstacle sensor such as a laser scanner or a sonar, or an imager (i.e., a camera that includes an image sensor), for example. When an obstacle is detected, the controller may halt the agricultural machine, or cause the agricultural machine to move along a path for avoiding the obstacle. Moreover, when an obstacle is detected, the controller may transmit a video that is captured by the imager to a monitoring computer used by a supervisor who performs remote monitoring. The sensing by an obstacle sensor or an imager may be affected by the light that is emitted from an illumination device. For example, in a configuration where a night-vision camera utilizing infrared is used to detect obstacles, intense visible light that is emitted from the illumination device may lower the detection accuracy. For example, intense visible light may cause white-out in camera images. Also, in a night-vision camera utilizing artificial intelligence (AI), where models for object recognition are learned based on infrared images, intense visible light existing in the surroundings may cause misrecognition. Furthermore, in the case where a plurality of agricultural machines simultaneously perform self-driving within the same field, one agricultural machine emitting intense visible light from its illumination device may hinder the infrared sensing by another agricultural machine. In the aforementioned preferred embodiment, optical power from the illumination device(s) is restricted while self-driving is being controlled at nighttime. Therefore, unfavorable influences on infrared sensing can be reduced.

If the sensing device detects an obstacle when self-driving is being controlled at nighttime, the controller may activate at least one of the illumination devices. The illumination device(s) to be activated may be selected so as to include the illumination device(s) that is capable of illuminating that obstacle, for example. Thus, in the case where the obstacle is a person or an animal, their attention is called, in a manner of urging them to leave the spot. In the case where a plurality of sensors are provided on the agricultural machine, the controller is able to identify the position of the obstacle based on the information as to which sensor has detected the obstacle. In accordance with the identified obstacle position, the controller may selectively activate one or more illumination devices that effectively illuminate the obstacle in question. In addition to activating the illumination device(s), the controller may also issue an audio alarm, e.g., an alarm sound emitted from a buzzer included in the agricultural machine.

If the sensing device detects an obstacle when the agricultural machine is traveling via self-driving in the field at nighttime, the controller may increase the optical power of at least one of the illumination devices. To "increase optical power" of an illumination device means increasing the power of light which is output from the illumination device by increasing the voltage or current with which to drive the illumination device. Activating the illumination device from a state of zero-amount of light (i.e., it being completely deactivated) also qualifies for "increasing optical power".

The sensing device may include a plurality of sensors that each detect an obstacle. If one or more sensors included among the plurality of sensors detects an obstacle or obstacles when the agricultural machine is traveling via self-driving in the field at nighttime, the controller may increase an optical power or optical powers of one or more illumination devices among the plurality of illumination devices that are associated with the one or more sensors.

The sensing device may include an imager to image the surroundings of the agricultural machine, and a signal processing circuit to detect an obstacle based on image data generated by the imager. In that case, if the signal processing circuit detects an obstacle when self-driving is being controlled at nighttime, the controller may activate at least one of the illumination devices. The controller and the signal processing circuit may be implemented as a single device.

The agricultural machine may further include a communication device to communicate with a monitoring computer via a network. The controller may be configured or programmed to cause the communication device to transmit image data to the monitoring computer while self-driving of the agricultural machine is being controlled, and transmit an alert signal to the monitoring computer when the signal processing circuit detects an obstacle. The alert signal may be a signal for causing the monitoring computer to output an audio or video for calling the attention of a supervisor who uses the monitoring computer, for example. With such a configuration, the supervisor can be effectively informed of an obstacle that exists in the surroundings of the agricultural machine.

The agricultural machine may further include another imager to acquire an image based on visible light. After the obstacle is detected and the optical power or optical powers of at least one illumination device is increased, the controller may cause the communication device to transmit image data generated by this other imager to the monitoring computer. With such a configuration, the supervisor is able to recognize an obstacle through an image based on visible light.

The controller may be configured or programmed to activate at least one illumination device in response to a command for activation that is transmitted from the monitoring computer through a user manipulation of the monitoring computer. With such a configuration, the user is able to activate illumination devices through remote manipulations, and grasp the state of the surroundings of the agricultural machine from a visible light image that is acquired from the imager.

A controller according to another preferred embodiment of the present disclosure is a device for controlling an agricultural machine that includes one or more illumination devices to illuminate surroundings of the agricultural machine in a traveling direction thereof. The controller includes one or more processors, and a memory storing a computer program. The computer program causes the one or more processors to deactivate at least one of the one or more illumination devices at nighttime, and control self-driving of the agricultural machine while keeping the at least one of the illumination devices deactivated.

A method according to still another preferred embodiment of the present disclosure is a method to be executed by a computer for controlling an agricultural machine that includes one or more illumination devices to illuminate surroundings of the agricultural machine in a traveling direction thereof. The method includes deactivating at least one of the one or more illumination devices at nighttime, and controlling self-driving of the agricultural machine while keeping the at least one of the illumination devices deactivated.

Hereinafter, a preferred embodiment will be described where the technique according to the present disclosure is applied to a work vehicle (e.g., a tractor) as an example of an agricultural machine. The techniques according to various example preferred embodiments of the present disclosure are applicable not only to work vehicles such as tractors, but also to any agricultural machine that performs self-driving. The agricultural machine may be any non-tractor work vehicle (e.g., a harvester, a rice transplanter, a vehicle for crop management, a vegetable transplanter, a mower, a seeder, a spreader, a mobile robot for agriculture), or an agricultural drone, for example.

### Preferred Embodiment 1

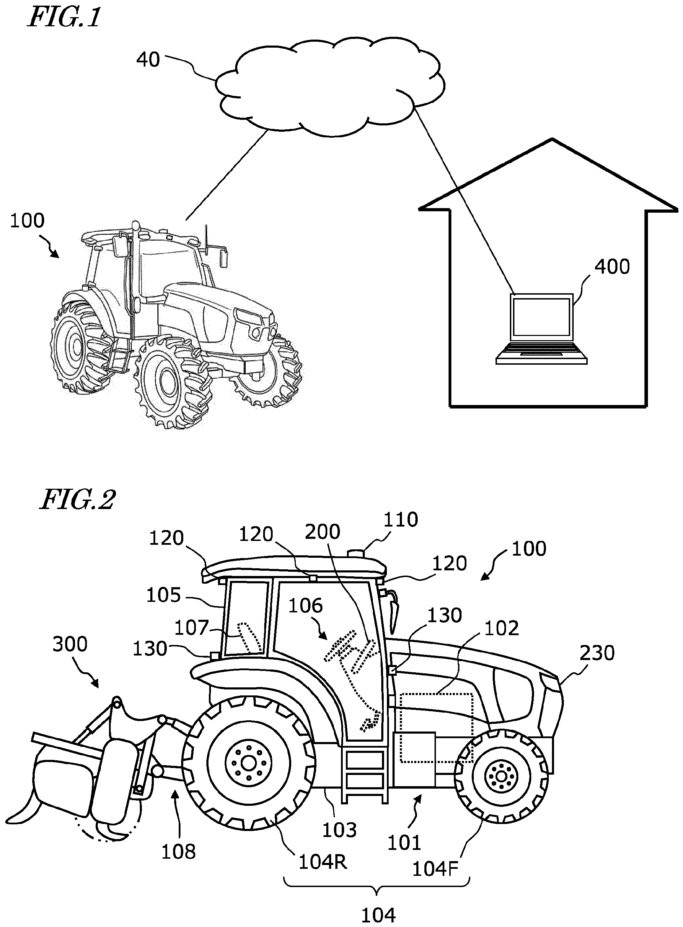

FIG. **1** is a diagram providing an overview of a system according to an illustrative preferred embodiment of the present disclosure. FIG. **1** illustrates a work vehicle **100** and a monitoring terminal **400** for remotely monitoring the work vehicle **100.** Communication between the work vehicle **100** and the monitoring terminal **400** is enabled via a network **40.** The work vehicle **100** is an example of the aforementioned agricultural machine, and the monitoring terminal **400** is an example of the aforementioned monitoring computer. In the present preferred embodiment, the work vehicle **100** is a tractor. The tractor can have an implement attached to its rear and/or its front. While performing agricultural work according to the particular type of implement, the tractor is able to automatically travel within a field. In the following description, a situation where the work vehicle **100** is controlling the implement to perform a task (work) may be expressed as the "work vehicle **100** performing a task (work)". The techniques according to the present preferred embodiment and any other preferred embodiments is similarly applicable to agricultural machines other than tractors.

The work vehicle **100** has a self-driving function. In other words, the work vehicle **100** travels by the action of a controller, rather than manually. The controller according to the present preferred embodiment is provided inside the work vehicle **100,** and is able to control both the speed and steering of the work vehicle **100.**

The work vehicle **100** includes a positioning device, including a GNSS receiver. Based on the position of the work vehicle **100** as identified by the positioning device and a target path stored in a storage device, the controller causes the work vehicle **100** to automatically travel. In addition to controlling the travel of the work vehicle **100,** the controller also controls the operation of the implement. As a result, while automatically traveling, the work vehicle **100** is able to perform a task (work) by using the implement.

The work vehicle **100** also includes a sensing device to detect obstacles and cameras to generate image data for use in remote monitoring. The work vehicle **100** consecutively transmits the image data acquired by the camera to the monitoring terminal **400.**

The monitoring terminal **400** is a computer that is used by a supervisor (hereinafter also referred to as the "user") who is at a remote place from the work vehicle **100.** The monitoring terminal may be provided at the home or the office of the user, for example. The monitoring terminal **400** may be a mobile terminal such as a laptop computer, a smartphone, or a tablet computer, or a stationary computer such as a desktop PC (Personal Computer). The monitoring terminal **400** causes a video, based on the image data transmitted from the work vehicle **100,** to be indicated on a display. By watching the video on the display, the user is able to grasp the state of the surroundings of the work vehicle **100.**

Hereinafter, the configuration and operation of a system according to the present preferred embodiment will be described in more detail.

FIG. **2** is a side view schematically showing the work vehicle **100** and an example implement **300** that is linked to the work vehicle **100.** The work vehicle **100** according to the present preferred embodiment functions in both a manual driving mode and a self-driving mode. In the self-driving mode, the work vehicle **100** is able to perform unmanned travel.

As shown in FIG. **2****,** the work vehicle **100** includes a vehicle body **101,** a prime mover (engine) **102,** and a transmission **103.** On the vehicle body **101,** tires (wheels) **104** and a cabin **105** are provided. The wheels **104** include a pair of front wheels **104F** and a pair of rear wheels **104R.** Inside the cabin **105,** a driver's seat **107,** a steering device **106,** an operational terminal **200,** and switches for manipulation are provided. In the case where the work vehicle **100** does not travel on public roads, either pair of the front wheels **104F** or the rear wheels **104R** may be crawlers, rather than tires.

The work vehicle **100** shown in FIG. **2** further includes a plurality of cameras **120.** The cameras **120** may be provided at the front/rear/right/left of the work vehicle **100,** for example. The cameras **120** capture images of the surrounding environment of the work vehicle **100**, and generate image data. The images acquired by the cameras **120** are transmitted to the monitoring terminal **400** which is responsible for remote monitoring. The images are used to monitor the work vehicle **100** during unmanned driving.

The work vehicle **100** further includes the positioning device **110**. The positioning device **110** includes a GNSS receiver. The GNSS receiver includes an antenna to receive a signal(s) from a GNSS satellite(s) and a processing circuit to determine the position of the work vehicle **100** based on the signal(s) received by the antenna. The positioning device **110** receive a GNSS signal(s) transmitted from a GNSS satellite(s), and performs positioning on the basis of the GNSS signal(s). GNSS is a general term for satellite positioning systems, such as GPS (Global Positioning System), QZSS (Quasi-Zenith Satellite System, e.g., MICHIBIKI), GLONASS, Galileo, BeiDou, and the like. Although the positioning device **110** in the present preferred embodiment is disposed above the cabin **105,** it may be disposed at any other position.

Instead of or in addition to the GNSS receiver, the positioning device **110** may include any other type of device, such as a LiDAR sensor. The positioning device **110** may utilize the data acquired by the cameras **120** for positioning. When objects serving as characteristic points exist in the environment that is traveled by the work vehicle **100,** the position of the work vehicle **100** can be estimated with a high accuracy based on data that is acquired with the LiDAR sensor or cameras **120** and an environment map that is previously recorded in the storage device. The LiDAR sensor or cameras **120** may be used together with the GNSS receiver. By correcting or complementing position data based on the GNSS signal(s) using the data acquired by the LiDAR sensor or cameras **120,** it becomes possible to identify the position of the work vehicle **100** with a higher accuracy. Furthermore, the positioning device **110** may complement the position data by using a signal from an inertial measurement unit (IMU) . The IMU can measure tilts and minute motions of the work vehicle **100.** By complementing the position data based on the GNSS signal using the data acquired by the IMU, the positioning performance can be improved.

The work vehicle **100** further includes a plurality of obstacle sensors **130.** In the example shown in FIG. **2****,** the obstacle sensors **130** are provided at the front and the rear of the cabin **105.** The obstacle sensors **130** may be disposed at other positions. For example, one or more obstacle sensors **130** may be disposed at any position selected from among the sides, the front, and the rear of the vehicle body **10,** and the cabin **105.** The obstacle sensors **130** may be used for detecting obstacles in the surroundings during self-traveling to come to a halt or detour around it.

The work vehicle **100** further includes a plurality of illumination devices **230.** Although FIG. **2** only illustrates one illumination device **230** as an example, various illumination devices **230,** such as headlights, work lights, side lights, etc., may be provided at a plurality of positions on the work vehicle **100.** Such illumination devices **230** are controlled by the controller.

The prime mover **102** may be a diesel engine, for example. Instead of a diesel engine, an electric motor may be used. The transmission **103** can change the propulsion and the moving speed of the work vehicle **100** through a speed changing mechanism. The transmission **103** can also switch between forward travel and backward travel of the work vehicle **100.**

The steering device **106** includes a steering wheel, a steering shaft connected to the steering wheel, and a power steering device to assist in the steering by the steering wheel. The front wheels **104F** are the wheels responsible for steering, such that changing their angle of turn (also referred to as "steering angle") can cause a change in the traveling direction of the work vehicle **100.** The steering angle of the front wheels **104F** can be changed by manipulating the steering wheel. The power steering device includes a hydraulic device or an electric motor to supply an assisting force for changing the steering angle of the front wheels **104F.** When automatic steering is performed, under the control of a controller disposed in the work vehicle **100,** the steering angle may be automatically adjusted by the power of the hydraulic device or electric motor.

A linkage device **108** is provided at the rear of the vehicle body **101.** The linkage device **108** may include, e.g., a three-point linkage (also referred to as a "three-point link" or a "three-point hitch"), a PTO (Power Take Off) shaft, a universal joint, and a communication cable. The linkage device **108** allows the implement **300** to be attached to or detached from the work vehicle **100.** The linkage device **108** is able to raise or lower the three-point linkage device with a hydraulic device, for example, thus changing the position and/or attitude of the implement **300.** Moreover, motive power can be sent from the work vehicle **100** to the implement **300** via the universal joint. While towing the implement **300,** the work vehicle **100** allows the implement **300** to perform a predetermined task. The linkage device may be provided frontward of the vehicle body **101.** In that case, the implement may be connected frontward of the work vehicle **100.**

Although the implement **300** shown in FIG. **2** is a rotary tiller, the implement **300** is not limited to a rotary tiller. For example, any arbitrary implement such as a seeder, a spreader, a transplanter, a mower, a rake implement, a baler, a harvester, a sprayer, or a harrow, may be connected to the work vehicle **100** for use.

The work vehicle **100** shown in FIG. **2** is capable of human driving; alternatively, it may only support unmanned driving. In that case, component elements which are only required for human driving, e.g., the cabin **105,** the steering device **106,** and the driver's seat **107** do not need to be provided in the work vehicle **100.** An unmanned work vehicle **100** may travel via autonomous driving, or by remote manipulation by a user.

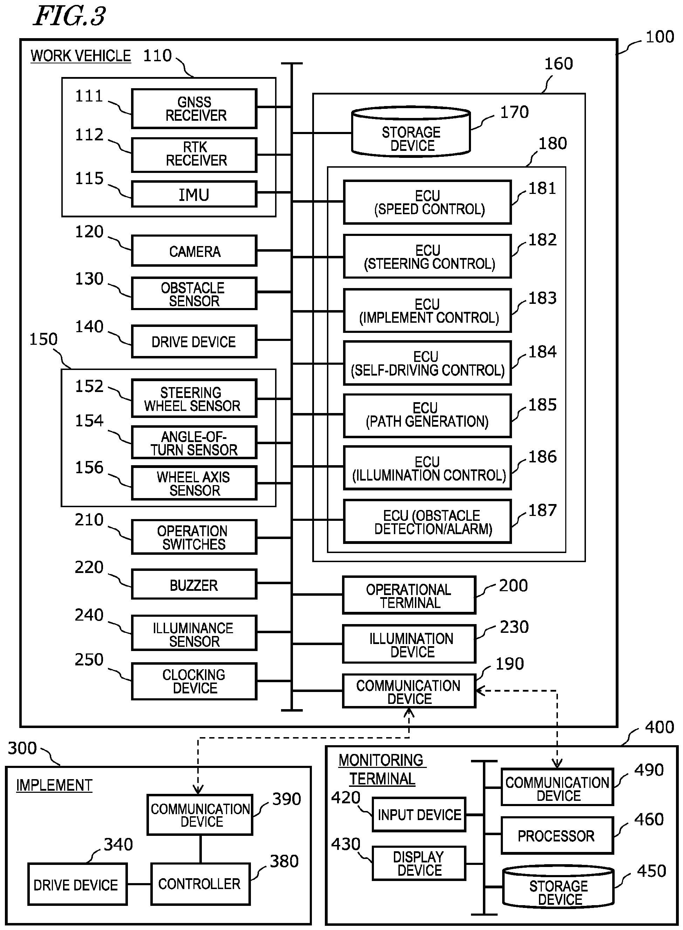

FIG. **3** is a block diagram showing an example configuration of the work vehicle **100,** the implement **300,** and the monitoring terminal **400.** The work vehicle **100** and the implement **300** can communicate with each other via a communication cable that is included in the linkage device **108.** The work vehicle **100** and the monitoring terminal **400** are able to communicate with each other via the network **40.**

In addition to the positioning device **110,** the cameras **120,** the obstacle sensors **130,** the operational terminal **200,** and the illumination devices **230,** the work vehicle **100** in the example of FIG. **3** includes a drive device **140,** sensors **150** to detect the operating status of the work vehicle **100,** a control system **160,** a communication device **190,** operation switches **210,** a buzzer **220,** an illuminance sensor **240,** and a clocking device **250.** The positioning device **110** includes a GNSS receiver **111,** an RTK receiver **112,** and an inertial measurement unit (IMU) **115.** The sensors **150** include a steering wheel sensor **152,** an angle-of-turn sensor **154,** and a wheel axis sensor **156.** The control system **160** includes a storage device **170** and a controller **180.** The controller **180** includes a plurality of electronic control units (ECU) **181** to **187.** The implement **300** includes a drive device **340,** a controller **380,** and a communication device **390.** The monitoring terminal **400** includes a GNSS receiver **410,** an input device **420,** a display device **430,** a storage device **450,** a processor **460,** and a communication device **490.** Note that FIG. **3** shows component elements which are relatively closely related to the operations of self-driving and illumination control by the work vehicle **100,** while other components are omitted from illustration.

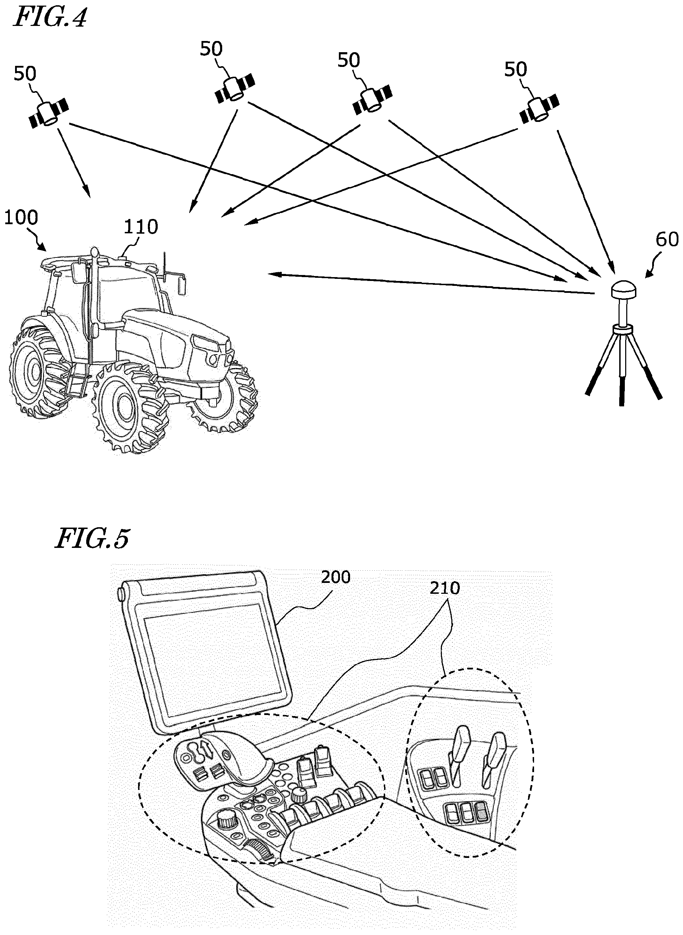

The positioning device **110** shown in FIG. **3** performs positioning of the work vehicle **100** by utilizing an RTK (Real Time Kinematic)-GNSS. FIG. **4** is a conceptual diagram showing an example of the work vehicle **100** which performs positioning based on an RTK-GNSS. In the positioning based on an RTK-GNSS, not only GNSS signals transmitted from multiple GNSS satellites **50,** but also a correction signal that is transmitted from a reference station **60** is used. The reference station **60** may be disposed near the field that is traveled by the work vehicle **100** (e.g., at a position within 10 km of the work vehicle **100).** The reference station **60** generates a correction signal of, e.g., an RTCM format based on the GNSS signals received from the multiple GNSS satellites **50,** and transmits the correction signal to the positioning device **110.** The GNSS receiver **111** in the positioning device **110** receives the GNSS signals transmitted from the multiple GNSS satellites **50.** The RTK receiver **112,** which includes an antenna and a modem, receives the correction signal transmitted from the reference station **60.** The positioning device **110** may include a processor which calculates the position of the work vehicle **100** based on the GNSS signals and the correction signal, thus achieving positioning. Use of an RTK-GNSS enables positioning with an accuracy on the order of several cm of errors, for example. Positional information (including latitude, longitude, and altitude information) is acquired through the highly accurate positioning by an RTK-GNSS. The positioning device **110** may calculate the position of the work vehicle **100** as frequently as, e.g., one to ten times per second.

Note that the positioning method is not limited to an RTK-GNSS; any arbitrary positioning method (e.g., an interferometric positioning method or a relative positioning method) that provides positional information with the necessary accuracy can be used. For example, positioning may be performed by utilizing a VRS (Virtual Reference Station) or a DGPS (Differential Global Positioning System). In the case where positional information with the necessary accuracy can be obtained without the use of the correction signal transmitted from the reference station **60,** positional information may be generated without using the correction signal. In that case, the positioning device **110** may lack the RTK receiver **122.**

The positioning device **110** in the present preferred embodiment further includes an IMU **115.** The IMU **115** includes a 3-axis accelerometer and a 3-axis gyroscope. The IMU **115** may include a direction sensor such as a 3-axis geomagnetic sensor. The IMU **115** functions as a motion sensor which can output signals representing parameters such as acceleration, velocity, displacement, and attitude of the work vehicle **100.** Based not only on the GNSS signals and the correction signal but also on a signal that is output from the IMU **115,** the positioning device **110** can estimate the position and orientation of the work vehicle **100** with a higher accuracy. The signal that is output from the IMU **115** may be used for the correction or complementation of the position that is calculated based on the GNSS signals and the correction signal. The IMU **115** outputs a signal more frequently than the GNSS signals. Utilizing this highly frequent signal allows the position and orientation of the work vehicle **100** to be measured more frequently (e.g., about 10 Hz or above). Instead of the IMU **115,** a 3-axis accelerometer and a 3-axis gyroscope may be separately provided. The IMU **115** may be provided as a separate device from the positioning device **110.**

In addition to or instead of the GNSS receiver **111,** the RTK receiver **112,** and the IMU **115,** the positioning device **110** may include other kinds of sensors, e.g., LiDAR sensors or image sensors. Depending on the environment that is traveled by the work vehicle **100,** it is possible to estimate the position and orientation of the work vehicle **100** with a high accuracy based on data from such sensors.

In the example of FIG. **3**, the processor of the positioning device **110** calculates the position of the work vehicle **100** based on signals which are output from the GNSS receiver **111,** the RTK receiver **112,** and the IMU **115.** The positional calculation may instead be performed by any device other than the positioning device **110.** For example, the controller **180** or an external computer may acquire output data from the each receiver and each sensor as is required for positioning, and calculate the position of the work vehicle **100** based on such data.

The cameras **120** are imagers that image the surrounding environment of the work vehicle **100.** Each camera **120** may include an image sensor such as a CCD (Charge Coupled Device) or a CMOS (Complementary Metal Oxide Semiconductor), for example. In addition, each camera **120** may include an optical system containing one or more lenses and a signal processing circuit. During travel of the work vehicle **100,** the cameras **120** image the surrounding environment of the work vehicle **100,** and generate image data (e.g., motion picture data). The cameras **120** are able to capture motion pictures at a frame rate of 3 frames/second (fps: frames per second) or greater, for example. The images generated by the cameras **120** may be used when a remote supervisor checks the surrounding environment of the work vehicle **100** with the monitoring terminal **400,** for example. The images generated by the cameras **120** may also be used for the purpose of positioning and/or obstacle detection. As shown in FIG. **2****,** a plurality of cameras **120** may be provided at different positions on the work vehicle **100,** or a single camera may be provided. A visible camera(s) for generating visible light images and an infrared camera(s) for generating infrared images may be separately provided. Both of a visible camera(s) and an infrared camera(s) may be provided as cameras for generating images for monitoring purposes. Infrared cameras may also be used for obstacle detection at nighttime.

The obstacle sensors **130** detect objects around the work vehicle **100.** Each obstacle sensor **130** may include a laser scanner or an ultrasonic sonar, for example. When an object exists at a position closer to the obstacle sensor **130** than a predetermined distance, the obstacle sensor **130** outputs a signal indicating the presence of an obstacle. A plurality of obstacle sensors **130** may be provided at different positions of the work vehicle **100.** For example, a plurality of laser scanners and a plurality of ultrasonic sonars may be disposed at different positions of the work vehicle **100.** Providing a multitude of obstacle sensors **130** can reduce blind spots in monitoring obstacles around the work vehicle **100.**

The drive device **140** includes various devices that are needed for the traveling of the work vehicle **100** and the driving of the implement **300,** e.g., the aforementioned prime mover **102,** transmission **103,** steering device **106,** and linkage device **108.** The prime mover **102** may include an internal combustion engine such as a diesel engine. Instead of an internal combustion engine or in addition to an internal combustion engine, the drive device **140** may include an electric motor that is dedicated to traction purposes.

The steering wheel sensor **152** measures the angle of rotation of the steering wheel of the work vehicle **100.** The angle-of-turn sensor **154** measures the angle of turn of the front wheels **104F,** which are the wheels responsible for steering. Measurement values by the steering wheel sensor **152** and the angle-of-turn sensor **154** are used for steering control by the controller **180.**

The wheel axis sensor **156** measures the rotational speed, i.e., the number of revolutions per unit time, of a wheel axis that is connected to a tire **104.** The wheel axis sensor **156** may be a sensor including a magnetoresistive element (MR), a Hall generator, or an electromagnetic pickup, for example. The wheel axis sensor **156** may output a numerical value indicating the number of revolutions per minute (unit: rpm) of the wheel axis, for example. The wheel axis sensor **156** is used to measure the speed of the work vehicle **100.**

The storage device **170** includes one or more storage media such as a flash memory or a magnetic disc. The storage device **170** stores various data that is generated by the positioning device **110,** the cameras **120,** the obstacle sensors **130,** the sensors **150,** and the controller **180.** The data that is stored by the storage device **170** may include map data in the environment that is traveled by the work vehicle **100** (which hereinafter may also be referred to as an "environment map"), and data of a target path of during self-driving. The storage device **170** also stores a computer program(s) to cause the ECUs in the controller **180** to perform various operations (to be described later). Such a computer program(s) may be provided for the work vehicle **100** via a storage medium (e.g., a semiconductor memory or an optical disc) or through telecommunication lines (e.g., the Internet). Such a computer program(s) may be marketed as commercial software.

The controller **180** includes a plurality of ECUs. The plurality of ECUs may include, for example, an ECU **181** for speed control, an ECU **182** for steering control, an ECU **183** for implement control, an ECU **184** for self-driving control, an ECU **185** for path generation, an ECU **186** for illumination control, and an ECU **187** for obstacle detection and alarming. The ECU **181** controls the prime mover **102,** the transmission **103,** and the brakes included in the drive device **140,** thus controlling the speed of the work vehicle **100.** The ECU **182** controls the hydraulic device or electric motor included in the steering device **106** based on a measurement value of the steering wheel sensor **152,** thus controlling the steering of the work vehicle **100.** In order to cause the implement **300** to perform a desired operation, the ECU **183** controls the operation of the three-point link, the PTO shaft, etc., that are included in the linkage device **108.** Also, the ECU **183** generates a signal to control the operation of the implement **300,** and transmits this signal from the communication device **190** to the implement **300.** Based on signals which are output from the positioning device **110,** the steering wheel sensor **152,** the angle-of-turn sensor **154,** and the wheel axis sensor **156,** the ECU **184** performs computation and control for achieving self-driving. During self-driving, the ECU **184** sends the ECU **181** a command to change the speed, and sends the ECU **182** a command to change the steering angle. In response to the command to change the speed, the ECU **181** controls the prime mover **102,** the transmission **103,** or the brakes to change the speed of the work vehicle **100.** In response to the command to change the steering angle, the ECU **182** controls the steering device **106** to change the steering angle. The ECU **185** generates a target path for the work vehicle **100,** and records it to the storage device **170.** The ECU **186** controls activation and deactivation of each illumination device **230.** The ECU **186** may be configured to adjust the optical power (e.g., luminous intensity) of each illumination device **230.** By changing the driving voltage or driving current to be input to each illumination device **230,** the ECU **186** is able to adjust the optical power of the illumination device **230.** The ECU **187** performs processing for obstacle detection and alarming. The ECU **187** includes a signal processing circuit that detects an obstacle based on signals which are output from the cameras **120** and the obstacle sensors **130.** In the present preferred embodiment, the cameras **120,** the obstacle sensors **130,** and the ECU **187** function as sensing devices to detect obstacles. When an obstacle is detected, the ECU **187** causes the buzzer **220** to generate an alarm sound, and controls the communication device **190** to transmit an alert signal to the monitoring terminal **400.**

Through the action of these ECUs, the controller **180** realizes self-driving. During self-driving, the controller **180** controls the drive device **140** based on the position of the work vehicle **100** as measured or estimated by the positioning device **110** and the target path stored in the storage device **170.** As a result, the controller **180** causes the work vehicle **100** to travel along the target path.

The plurality of ECUs included in the controller **180** may communicate with one another according to a vehicle bus standard such as CAN (Controller Area Network). Instead of CAN, faster communication methods may be used, e.g., Automotive Ethernet. Although the ECUs **181** to **187** are illustrated as individual corresponding blocks in FIG. **3**, each of these functions may be implemented by a plurality of ECUs. Alternatively, an onboard computer that integrates the functions of at least some of the ECUs **181** to **187** may be provided. The controller **180** may include ECUs other than the ECUs **181** to **187,** and any number of ECUs may be provided in accordance with functionality. Each ECU includes a processing circuit including one or more processors.

The communication device **190** is a circuit that performs communications with the communication device **390** of the implement **300.** The communication device **190** includes circuitry to perform exchanges of signals complying with an ISOBUS standard such as ISOBUS-TIM, for example, between itself and the communication device **390** of the implement **300.** This causes the implement **300** to perform a desired operation, or allows information to be acquired from the implement **300.** The communication device **190** may further include a communication circuit and an antenna to exchange signals via the network **40** between the communication device **190** and the communication device **490** of the monitoring terminal **400.** The network **40** may include a 3G, 4G, 5G, or other cellular mobile communications network and the Internet, for example. Moreover, the communication device **190** can communicate with an external computer via a wired or wireless network. The external computer may be a server computer which centralizes management of information concerning fields by using a cloud, and assists in agriculture by utilizing the data on the cloud, for example. Such an external computer may be configured to perform a part of the functionality of the work vehicle **100.** For example, the path generation function of the ECU **185** may be performed by an external computer instead. The communication device **190** may have the function of communicating with a mobile terminal that is used by a supervisor who is situated near the work vehicle **100.** With such a mobile terminal, communication may be performed based on any arbitrary wireless communication standard, e.g., Wi-Fi, 3G, 4G, 5G or other cellular mobile communication standards, or Bluetooth.

The buzzer **220** is an audio output device to present an alarm sound for alerting the user of an abnormality. For example, the buzzer **220** may present an alarm sound when an obstacle is detected during self-driving. The buzzer **220** is controlled by the ECU **187.**

The operational terminal **200** is a terminal for the user to perform a manipulation related to the traveling of the work vehicle **100** and the operation of the implement **300,** and may also be referred to as a virtual terminal (VT). The operational terminal **200** may include a display device such as a touch screen panel, and/or one or more buttons. The display device may be a display such as a liquid crystal or an organic light-emitting diode (OLED), for example. By manipulating the operational terminal **200,** the user can perform various manipulations, such as switching ON/OFF the self-driving mode, setting a target path, recording or editing a map, and switching ON/OFF the implement **300.** At least some of these manipulations can also be realized by manipulating the operation switches **210.** The operational terminal **200** may be configured so as to be detachable from the work vehicle **100.** A user who is remote from the work vehicle **100** may manipulate the detached operational terminal **200** to control the operation of the work vehicle **100.** Instead of the operational terminal **200,** the user may manipulate a smartphone, a tablet computer, or a personal computer (PC), or other apparatuses on which necessary application software is installed, to control the operation of the work vehicle **100.**

The plurality of illumination devices **230** are devices to illuminate the surroundings of the work vehicle **100,** such as headlights or work lights, for example. The plurality of illumination devices **230** may illuminate the ground surface of a field, a crop growing in the field, the surroundings of the work vehicle **100,** and/or the surroundings of the implement **300,** for example. Each illumination device **230** includes one or more light sources. Each light source may be a light-emitting diode (LED), a halogen lamp, or a xenon lamp, for example. Some of the illumination devices **230** may be provided at positions to illuminate the surroundings of the work vehicle **100** in its traveling direction. As used herein, the traveling direction means the front direction when the work vehicle **100** makes a forward travel, or the rear direction when the work vehicle **100** makes a backward travel.

The illuminance sensor **240** is provided on the vehicle body **101.** The illuminance sensor **240** measures an illuminance in the surroundings of the work vehicle **100,** and outputs a signal which is in accordance with the measured illuminance. A plurality of illuminance sensors **240** may be provided at a plurality of positions of the vehicle body **101**. The signal (s) which is output from the illuminance sensor(s) **240** may be used for illumination control by the ECU **186.**

The clocking device **250** is a device that measures time. For example, the clocking device **250** includes a circuit having a timekeeping function, e.g., a real-time clock, and outputs a signal indicating a measured point of time. The clocking device **250** may be included in the controller **180.** The signal indicating a point of time that is output from the clocking device **250** may be used for illumination control by the ECU **186.** Instead of providing the clocking device **250,** for example, the ECU **186** may acquire time information from a time server that is external to the work vehicle **100** via the network **40,** or acquire time information that is calculated by the positioning device **110** based on signals from the GNSS satellites. The signal that is output from the illuminance sensor **240** and the time information that is output from the clocking device **250** or the like may be used for determining whether it is nighttime or not. It may be only one of the illuminance sensor(s) **240** or the clocking device **250** that is provided on the work vehicle **100**.

The drive device **340** in the implement **300** performs a necessary operation for the implement **300** to perform a predetermined task. The drive device **340** includes devices adapted to the intended use of the implement **300**, e.g., a pump, a hydraulic device, an electric motor, or a pump. The controller **380** controls the operation of the drive device **340.** In response to a signal that is transmitted from the work vehicle **100** via the communication device **390,** the controller **380** causes the drive device **340** to perform various operations. Moreover, a signal that is in accordance with the state of the implement **300** may be transmitted from the communication device **390** to the work vehicle **100**.

The input device **420** in the monitoring terminal **400** is a device that accepts input operations from the user. The input device **420** may include a mouse, a keyboard, or one or more buttons or switches, for example. The display device **430** may be a display such as a liquid crystal or an OLED, for example. The input device **420** and the display device **430** may be implemented as a touch screen panel. The storage device **450** may include a semiconductor storage medium such as a flash memory, for example. The storage device **450** stores a computer program(s) to be executed by the processor **460** and various data that is generated by the processor **460.** By executing the computer program(s) stored in the storage device **450,** the processor **460** performs the following operation, for example. In response to the user's manipulation made via the input device **420,** the processor **460** causes an image that is captured by the cameras **120** of the work vehicle **100** to be displayed on the display device **430.**

FIG. **5** is a schematic diagram showing an example of the operational terminal **200** and operation switches **210** to be provided in the cabin **105.** In the cabin **105,** switches **210,** which are a multitude of switches that are manipulable to the user, are disposed. The operation switches **210** may include, for example, a switch to select the gear shift as to a main gear shift or a range gear shift, a switch to switch between a self-driving mode and a manual driving mode, a switch to switch between forward travel and backward travel, a switch to allow manual switching between activation (ON) and deactivation (OFF) of each illumination device **230,** a switch to raise or lower the implement **300,** and the like. In the case where the work vehicle **100** only performs unmanned driving, and lacks human driving functionality, the work vehicle **100** does not need to include the operation switches **210.**

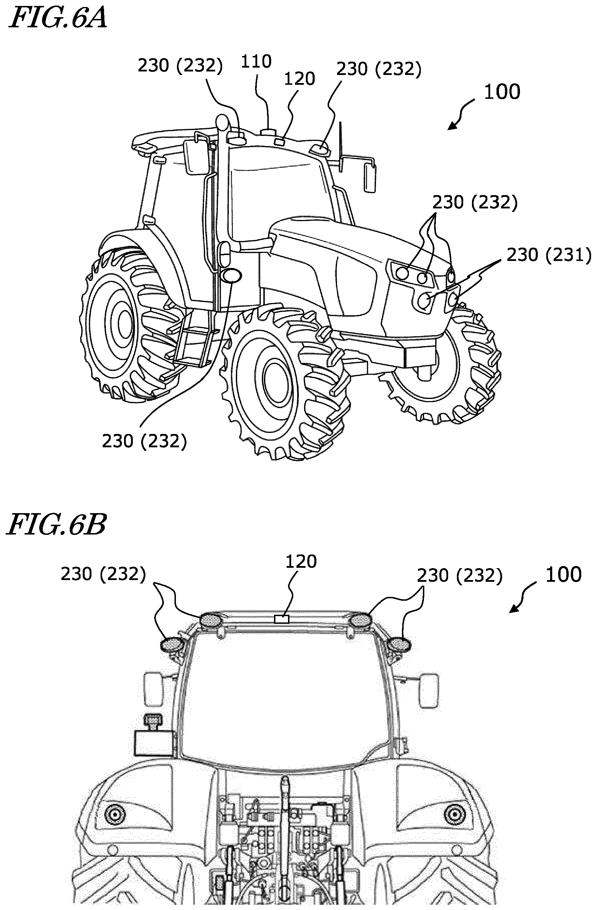

FIGS. **6A** and **6B** are diagrams showing example arrangements of the illumination devices **230.** FIG. **6A** shows an example of a plurality of illumination devices **230** provided at the front of the work vehicle **100.** FIG. **6B** shows an example of a plurality of illumination devices **230** provided at the rear of the work vehicle **100.** As shown in FIG. **6A****,** this work vehicle **100** includes two headlights **231** and a multitude of work lights **232** at different positions at the front. Moreover, as shown in FIG. **6B****,** this work vehicle **100** includes four work lights **232** at different positions at the rear. Some or all of these illumination devices **230** may have their activation restricted by the ECU **186** when self-driving is performed within a field at nighttime. Note that the arrangement of the illumination devices **230** may be various, without being limited to the arrangements shown in FIGS. **6A** and **6B****.**

Next, an example operation of the work vehicle **100** will be described.

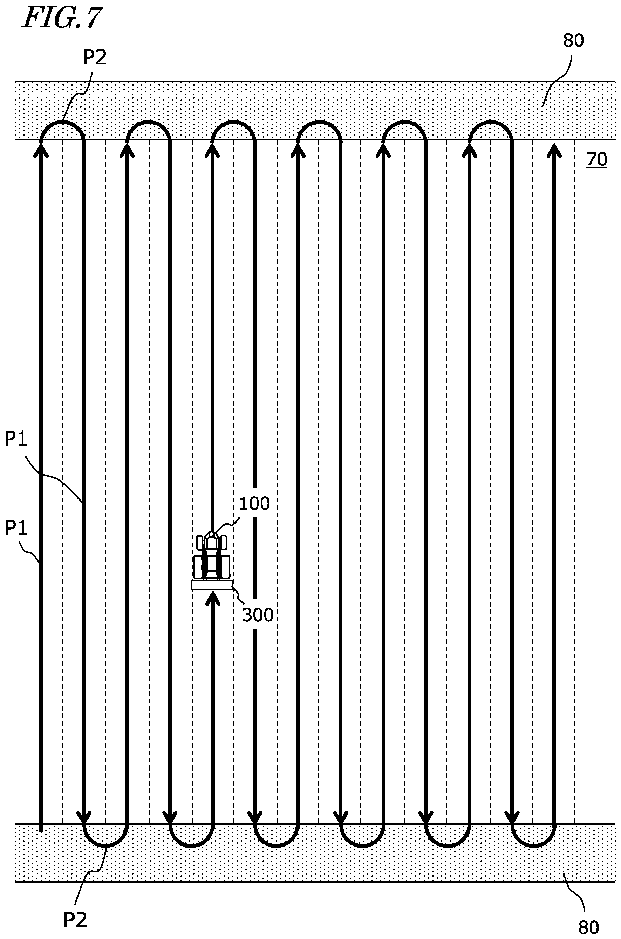

FIG. **7** is a diagram schematically showing an example of a work vehicle **100** automatically traveling along a target path in a field. In this example, the field includes a work area **70** in which the work vehicle **100** performs a task by using the implement **300,** and headlands **80** that are located near the outer edge of the field. The user may designate which regions on the map of the field would correspond to the work area **70** and the headlands **80** in advance. The target path in this example includes a plurality of parallel main paths **P1** and a plurality of turning paths **P2** interconnecting the plurality of main paths **P1.** The main paths **P1** are located in the work area **70,** whereas the turning paths **P2** are located in the headlands **80.** Although each main path **P1** in FIG. **7** is illustrated as a linear path, each main path **P1** may also contain a curved portion(s). Broken lines in FIG. **7** depict the working breadth of the implement **300.** The working breadth is previously set and recorded in the storage device **170.** The working breadth may be set and recorded as the user manipulates the operational terminal **200.** Alternatively, the working breadth may be automatically recognized and recorded when the implement **300** is connected to the work vehicle **100.** The interval between the plurality of main paths **P1** may be matched to the working breadth. The target path, on the other hand, is generated by the ECU **185** based on the user's manipulation, before self-driving is begun. The target path may be generated so as to cover the entire work area **70** in the field, for example. Along the target path shown in FIG. **7****,** the work vehicle **100** automatically travels while reciprocating between the headlands **80,** from a beginning point of work to an ending point of work. Note that the target path shown in FIG. **7** is only an example, and the target path may be arbitrarily determined.

Next, an example control by the controller **180** during self-driving will be described.

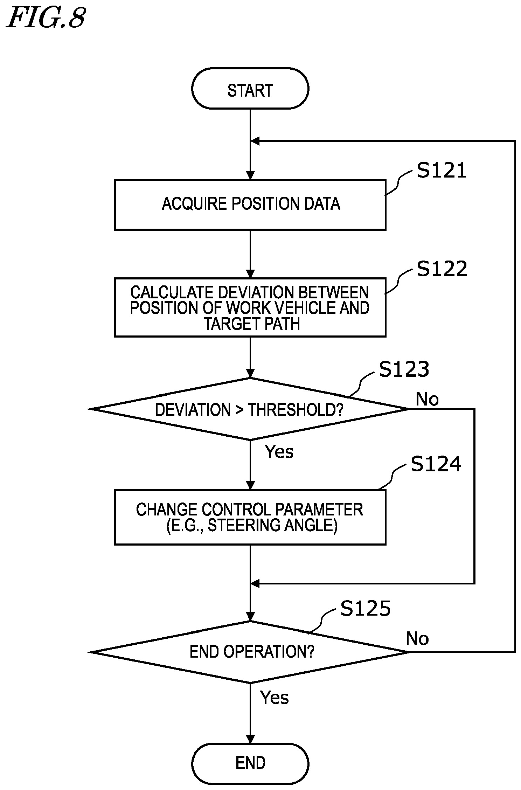

FIG. **8** is a flowchart showing an example operation of steering control to be performed by the controller **180** during self-driving. During travel of the work vehicle **100,** the controller **180** performs automatic steering by performing the operation from steps **S121** to **S125** shown in FIG. **8****.** The speed of the work vehicle **100** will be maintained at a previously-set speed, for example. First, during travel of the work vehicle **100,** the controller **180** acquires data representing the position of the work vehicle **100** that is generated by the positioning device **110** (step **S121).** Next, the controller **180** calculates a deviation between the position of the work vehicle **100** and the target path (step **S122).** The deviation represents the distance between the position of the work vehicle **100** and the target path at that moment. The controller **180** determines whether the calculated deviation in position exceeds the previously-set threshold or not (step **S123).** If the deviation exceeds the threshold, the controller **180** changes a control parameter of the steering device included in the drive device **140** so as to reduce the deviation, thus changing the steering angle (step **S124).** If the deviation does not exceed the threshold at step **S123,** the operation of step **S124** is omitted. At the following step **S125,** the controller **180** determines whether a command to end operation has been received or not. The command to end operation may be given when the user has instructed that self-driving be suspended through remote manipulations, or when the work vehicle **100** has arrived at the destination, for example. If the command to end operation has not been issued, the control returns to step **S121** and performs a similar operation based on a newly measured position of the work vehicle **100.** The controller **180** repeats the operation from steps **S121** to **S125** until a command to end operation is given. The aforementioned operation is executed by the ECUs **182** and **184** in the controller **180.**

In the example shown in FIG. **8**, the controller **180** controls the drive device **140** based only on a deviation between the position of the work vehicle **100** as identified by the positioning device **110** and the target path. However, a deviation in terms of directions may further be considered in the control. For example, when a directional deviation exceeds a previously-set threshold, where the directional deviation is an angle difference between the orientation of the work vehicle **100** as identified by the positioning device **110** and the direction of the target path, the controller **180** may change the control parameter (e.g., steering angle) of the steering device of the drive device **140** in accordance with the deviation.

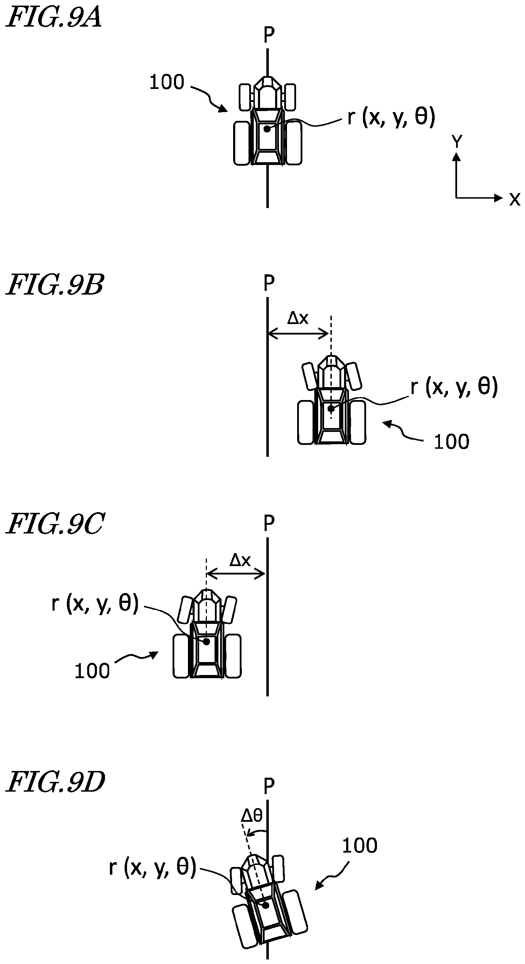

Hereinafter, with reference to FIGS. **9A** to **9D****,** an example of steering control by the controller **180** will be described more specifically.

FIG. **9A** is a diagram showing an example of a work vehicle **100** that travels along a target path **P.** FIG. **9B** is a diagram showing an example of a work vehicle **100** at a position which is shifted rightward from the target path **P.** FIG. **9C** is a diagram showing an example of a work vehicle **100** at a position which is shifted leftward from the target path **P.** FIG. **9D** is a diagram showing an example of a work vehicle **100** which is oriented in an inclined direction with respect to the target path **P.** In these figures, the pose, i.e., the position and orientation, of the work vehicle **100** as measured by the positioning device **110** is expressed as r(x,y, θ). Herein, (x,y) are coordinates representing the position of a reference point on the work vehicle **100,** in an XY coordinate system which is a two-dimensional coordinate system being fixed to the globe. In the examples shown in FIGS. **9A** to **9D****,** the reference point on the work vehicle **100** is at a position on the cabin where a GNSS antenna is disposed, but the reference point may be at any arbitrary position. θ is an angle representing the measured orientation of the work vehicle **100.** Although the target path **P** is shown parallel to the Y axis in the examples illustrated in these figures, generally speaking, the target path **P** may not necessarily be parallel to the Y axis.

As shown in FIG. **9A****,** in the case where the position and orientation of the work vehicle **100** are not deviated from the target path **P,** the controller **180** maintains the steering angle and speed of the work vehicle **100** without changing them.

As shown in FIG. **9B****,** when the position of the work vehicle **100** is shifted rightward from the target path **P,** the controller **180** changes the steering angle so that the traveling direction of the work vehicle **100** will be inclined leftward, thus bringing the work vehicle **100** closer to the path **P.** Herein, not only the steering angle but also the speed may be changed. The magnitude of the steering angle may be adjusted in accordance with the magnitude of a positional deviation Δx, for example.

As shown in FIG. **9C****,** when the position of the work vehicle **100** is shifted leftward from the target path **P,** the controller **180** changes the steering angle so that the traveling direction of the work vehicle **100** will be inclined rightward, thus bringing the work vehicle **100** closer to the path **P**. In this case, too, not only the steering angle but also the speed may be changed. The amount of change of the steering angle may be adjusted in accordance with the magnitude of the positional deviation Δx, for example.

As shown in FIG. **9D****,** in the case where the position of the work vehicle **100** is not considerably deviated from the target path **P** but its orientation is nonetheless different from the direction of the target path **P,** the controller **180** changes the steering angle so that the directional deviation Δθ will become smaller. In this case, too, not only the steering angle but also the speed may be changed. The magnitude of the steering angle may be adjusted in accordance with the magnitudes of the positional deviation Δx and the directional deviation Δθ, for example. For instance, the amount of change of the steering angle (which is in accordance with the directional deviation Δθ) may be increased as the absolute value of the positional deviation Δx decreases. When the positional deviation Δx has a large absolute value, the steering angle will be changed greatly in order for the work vehicle **100** to return to the path **P,** so that the directional deviation Δθ will inevitably have a large absolute value. Conversely, when the positional deviation Δx has a small absolute value, the directional deviation Δθ needs to become closer to zero. Therefore, it may be advantageous to introduce a relatively large weight (i.e., control gain) for the directional deviation Δθ in determining the steering angle.

For the steering control and speed control of the work vehicle **100,** control techniques such as PID control or MPC (Model Predictive Control) may be applied. Applying these control techniques will make for smoothness of the control of bringing the work vehicle **100** closer to the target path **P.**

Note that, when an obstacle is detected by one or more obstacle sensors **130** during travel, the controller **180** halts the work vehicle **100.** Alternatively, when an obstacle is detected, the controller **180** may control the drive device **140** so as to avoid the obstacle.

Next, an illumination control and example operation upon detecting an obstacle to be performed by the controller **180** will be described. In the following example, it is assumed that the work vehicle **100** performs unmanned self-traveling in a field at nighttime. The controller **180** in the present preferred embodiment controls self-driving while keeping at least one of the illumination devices **230** deactivated at nighttime. Among the illumination devices **230,** any illumination device that is kept deactivated during self-driving at nighttime may be referred to as "an illumination device(s) to-be-controlled" in the following description. The controller **180** may perform the below-described control for only the headlights **231** as the illumination devices to-be-controlled, for example, among the illumination devices **230.** Alternatively, the controller **180** may perform the below-described control for the headlights **231** and the work lights **232** as the illumination devices to-be-controlled. Further alternatively, the controller **180** may perform the below-described control for all illumination devices **230** as the illumination devices **230** to-be-controlled. Upon beginning to control self-driving in a state where the illumination device(s) to-be-controlled is activated, the controller **180** deactivates the illumination device (s) . Irrespective of whether the switch for manually switching between activation and deactivation of the illumination device(s) to-be-controlled is in an ON state or an OFF state, the controller **180** deactivates the illumination device(s) when beginning self-driving.

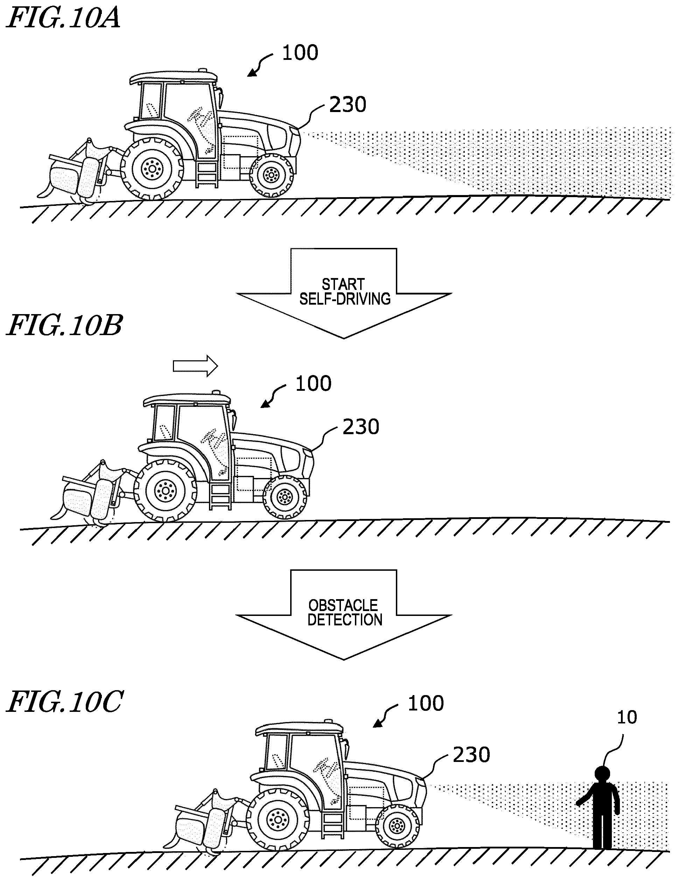

FIGS. **10A to 10C** are diagrams schematically illustrating illumination control and an example operation upon detecting an obstacle according to the present preferred embodiment. FIG. **10A** depicts a work vehicle **100** at a halt in a field at nighttime, with the illumination devices **230** to-be-controlled (which in this example are the headlights **231)** being activated. If an instruction to begin self-driving is given in this state, as is shown in of FIG. **10B****,** the controller **180** deactivates the illumination devices **230** to-be-controlled, and causes the work vehicle **100** to begin self-traveling.

While the work vehicle **100** is automatically traveling, as shown in FIG. **10C****,** an obstacle **10** such as a person or an animal may intrude in the path to be traveled by the work vehicle **100.** Such an obstacle **10** is detected by the ECU **187** of the controller **180** based on signals which are output from the obstacle sensors **130.** Upon detecting the obstacle **10,** the controller **180** halts the work vehicle **100,** and activates the illumination devices **230.** Thus, in the case where the obstacle **10** is a person or an animal, their attention is called, in a manner of urging them to leave the spot. Depending on the position or direction of the obstacle **10,** the controller **180** may change the illumination devices **230** to activate. The position and direction of the obstacle **10** can be identified roughly on the basis of which obstacle sensor(s) **130** has detected the obstacle **10.** The controller **180** may activate one or more illumination devices **230** that are associated with the obstacle sensor(s) **130.** Upon detecting the obstacle **10,** the controller **180** may cause the buzzer **220** to present an alarm sound. Moreover, upon detecting the obstacle **10,** the controller **180** may control the communication device **190** to transmit an alert signal to the monitoring terminal **400.** Upon receiving such an alert signal, the monitoring terminal **400** may cause a message, indicating that the obstacle **10** has been detected and the work vehicle **100** has halted, to be displayed on the display device **430.** Upon receiving the alert signal, the monitoring terminal **400** may output an alarm sound from a loudspeaker. Based on the message or the alarm sound, the supervisor is able to know that the work vehicle **100** has halted. Once the obstacle **10** has left the path, the controller **180** again deactivates the illumination devices **230,** and causes the work vehicle **100** to restart the tasked travel.

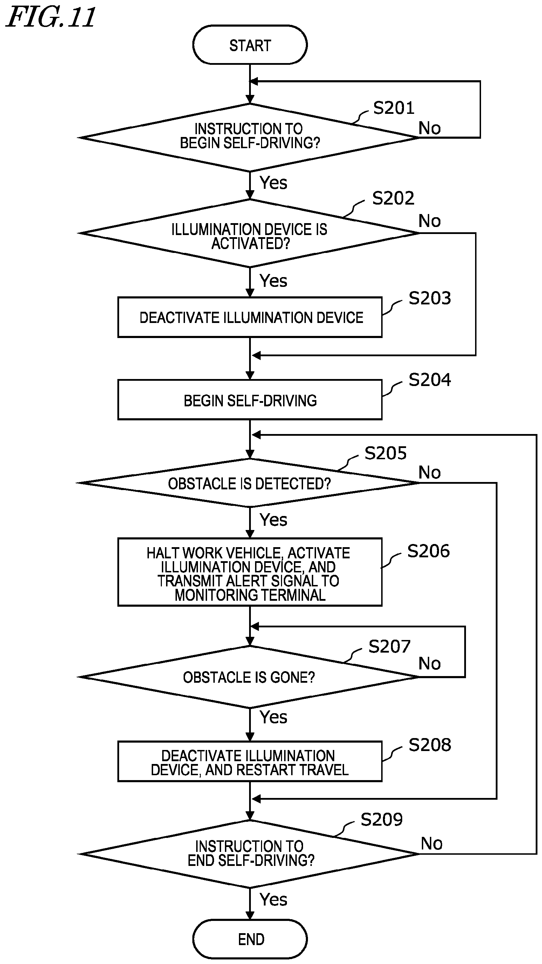

FIG. **11** is a flowchart showing an example operation of the controller **180** according to the present preferred embodiment. First, the controller **180** in this example determines whether an instruction to begin self-driving has been given or not (step **S201)** . The instruction to begin self-driving may be given through a remote manipulation by the user, or from an external server, for example. Once the instruction to begin self-driving is given, the controller **180** determines whether at least one of the illumination devices **230** to-be-controlled is in an activated state or not (step **S202).** If at least one of the illumination devices **230** to-be-controlled is in an activated state, the controller **180** deactivates the activated illumination device(s) **230** (step **S203).** If all illumination devices **230** are in a deactivated state, the operation of step **S203** is omitted. Then, the controller **180** sends a command to the drive device **140** of the work vehicle **100** to begin self-driving (step **S204).** After beginning self-driving, the work vehicle **100** performs a task while traveling in the field along the target path.

While the work vehicle **100** is traveling, based on signals which are output from the obstacle sensors **130,** the controller **180** determines whether an obstacle exists in the surroundings of the work vehicle **100** or not (step **S205)** . If no obstacle exists, control proceeds to step **S209.** If an obstacle exists, the controller **180** halts the work vehicle **100,** activates the illumination device(s) **230,** and transmits an alert signal to the monitoring terminal **400** (step **S206).** Thereafter, based on the signals which are output from the obstacle sensors **130** and with a predetermined cycle (e.g., 1 second, 3 seconds, or 5 seconds), the controller **180** determines whether the obstacle is gone or not (step **S207).** If the obstacle is gone, the controller **180** again deactivates the illumination devices **230,** and restarts self-traveling of the work vehicle **100** (step **208).** Thereafter, until receiving an instruction to end self-driving at step **S209,** the controller **180** repeats the operation from steps **S205** to **S208.**

Through the above operation, the work vehicle **100** performs self-traveling while keeping the illumination device(s) **230** deactivated in the field at nighttime. As a result, power consumption can be reduced, and insects can be prevented from being attracted. Moreover, in the case where any other work vehicle that is self-driving exists at a position opposite from the work vehicle **100,** it is possible to prevent the other work vehicle from having its sensing efforts hindered by intense illumination.

It may be not only when an obstacle is detected but also when a command for activation is transmitted from the monitoring terminal **400** that the controller **180** activates the illumination device(s) **230.** In this case, the monitoring terminal **400** transmits a command for activation to the controller **180** in response to the user's manipulation. In response to the command for activation, the controller **180** may activate the illumination device(s) **230** which illuminates the direction(s) in which the camera(s) **120** that acquires a visible light image(s) to be transmitted to the monitoring terminal **400** is oriented, and cause the camera(s) **120** to perform imaging, for example. As a result, when the user wishes to check the state of the surroundings of the work vehicle **100,** clear images can be obtained. The controller **180** transmits the image(s) acquired by the camera(s) **120** from the communication device **190** to the monitoring terminal **400.** Based on the transmitted image (s), the user is able to check the state of the surroundings of the work vehicle **100.**

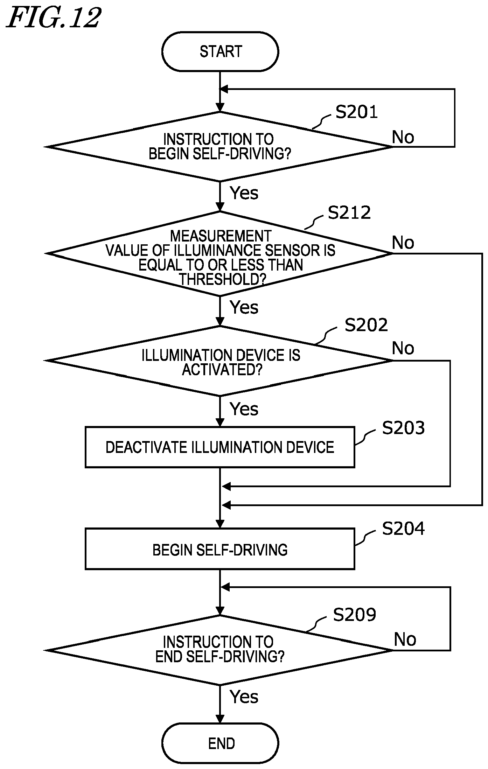

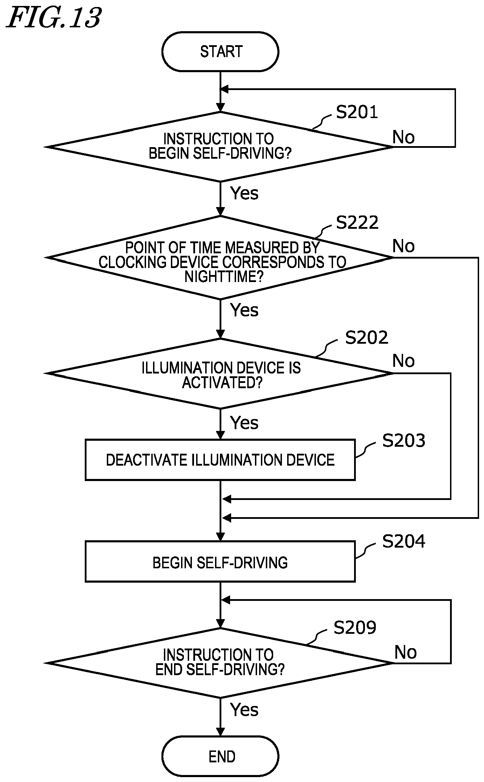

The controller **180** may perform the aforementioned control only during a period of self-driving that is performed at nighttime or during the hours which are close to nighttime. Hereinafter, with reference to FIG. **12** and FIG. **13****,** an example of such operation will be described.

FIG. **12** is a flowchart showing an example of illumination control based on measurement values of the illuminance sensors **240.** In this example, the operations of steps **S201, S202, S203, S204** and **S209** are identical to the operations of the corresponding steps in FIG. **11****.** In the example of FIG. **12****,** the operation concerning obstacle detection from steps **S205** to **S208** shown in FIG. **11** is omitted. In the example of FIG. **12****,** as in the example of FIG. **11****,** the operation from steps **S205** to **S208** may be performed. In the example of FIG. **12****,** step **S212** is inserted between step **S201** and step **S202.** At step **S212,** the ECU **186** of the controller **180** determines whether or not a measurement value of illuminance that is measured by an illuminance sensor **240** is equal to or less than a threshold. The ECU **186** performs the operation of steps **S202** and **S203** only when the measurement value is equal to or less than the threshold. The threshold may be set to a value that is close to an average illuminance that is measured at sundown or at sunrise, for example. If the measurement value is greater than the threshold, the operation of steps **S202** and **S203** is omitted.

FIG. **13** is a flowchart showing an example of illumination control based on a measurement value of the clocking device **250.** In this example, too, steps **S201, S202, S203, S204** and **S209** are identical to the operations of the corresponding steps in FIG. **11****.** Although the operation concerning obstacle detection from steps **S205** to **S208** shown in FIG. **11** is omitted in the example of FIG. **13****,** this operation may also be performed. In the example of FIG. **13****,** step **S222** is inserted between step **S201** and step **S202.** At step **S222,** the ECU **186** of the controller **180** determines whether the point of time measured by the clocking device **250** falls within a range of time corresponding to nighttime or not. The ECU **186** performs the operation of steps **S202** and **S203** only when the measure point of time falls within the range of time corresponding to nighttime. The range of time corresponding to nighttime differs depending on the day and the place. The ECU **186** in this example changes the range of time corresponding to nighttime depending on the day and the place. If the measured point of time does not correspond to nighttime, the operation of steps **S202** and **S203** is omitted. Instead of a point of time measured by the clocking device **250,** a point of time that is acquired from an external time server via the network **40** or a point of time that is calculated based on a signal (s) from a GNSS satellite (s) may be utilized in the aforementioned process.

In the examples of FIG. **12** and FIG. **13****,** the controller **180** performs the operation of detecting the activated state of the illumination devices **230** and deactivating the illumination devices **230** only at nighttime or during the hours which are close to nighttime. A situation where the illumination devices **230** are activated at the beginning of self-driving often occurs during the hours when it is dark outside, e.g., at nighttime. During the hours when it is light outside, even without having to restrict illumination, it is less likely for insects to be attracted or to hinder the sensing by an opposing vehicle. Therefore, a configuration in which the aforementioned illumination control is performed only at nighttime or during the hours which are close to nighttime can still provide advantageous effects.

Although the above description assumes the case where the work vehicle **100** performs self-traveling within an (agricultural, etc.) field, the work vehicle **100** may also perform self-traveling on public roads outside the fields. In that case, an environment map outside the fields, including public roads, is previously recorded in the storage device **170.** When the work vehicle **100** travels on a public road, the work vehicle **100** travels while sensing the surroundings by using the cameras **120** or other sensing devices, with the implement **300** being raised. A vehicle traveling on a public road at nighttime activates some of the plurality of illumination devices **230.** For example, a work vehicle **100** traveling on a public road at nighttime is required to activate the headlights **231** and the taillights and to deactivate the work lights **232.** Therefore, when performing self-driving on a public road at nighttime, the ECU **186** of the controller **180** performs a different kind of illumination control from that which is performed within a field.

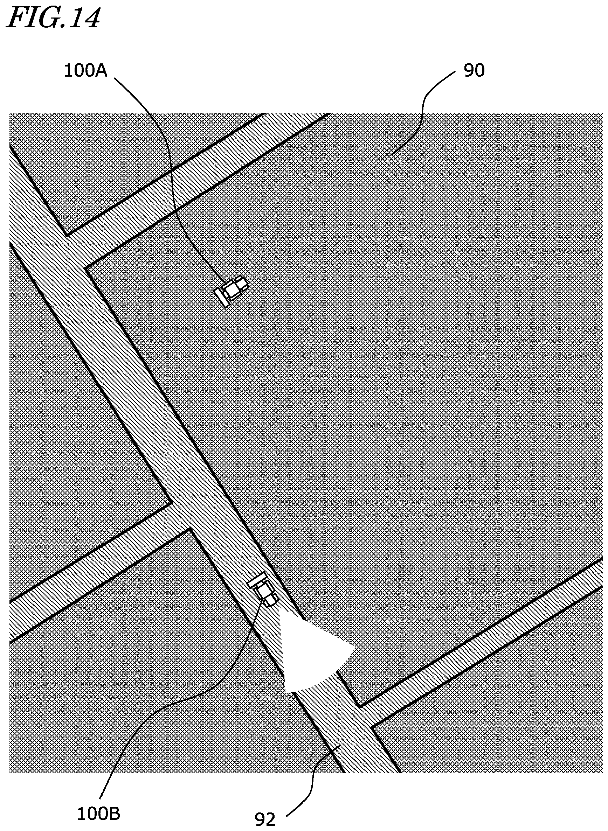

FIG. **14** is a diagram schematically showing different kinds of illumination control being performed within a field and outside the field. FIG. **14** illustrates a work vehicles **100A** which performs self-driving within a field **90** and a work vehicle **100B** which performs self-driving on a public road **92** outside the field **90.** The work vehicles **100A** and **100B** both have the same configuration as that of the above-described work vehicle **100.** The controller **180** of the work vehicle **100A** traveling in the field **90** controls self-driving while keeping the headlights **231** and the work lights **232** deactivated. This mode is referred to as the "deactivation mode". On the other hand, the controller **180** of the work vehicle **100B** traveling on the public road **92** controls self-driving while keeping the headlights **231** activated but keeping the work lights **232** deactivated. This mode is referred to as the "activation mode". In this example, the work lights **232** are always deactivated during self-driving, and only used when manual driving is performed in the fields at nighttime. Note that the controller **180** of the work vehicle **100B** traveling on the public road **92** may activate other kinds of illumination devices, e.g., the taillights, as necessary. The controller **180** of the work vehicle **100A** traveling in the field **90** may activate or deactivate other kinds of illumination devices such as the taillights.

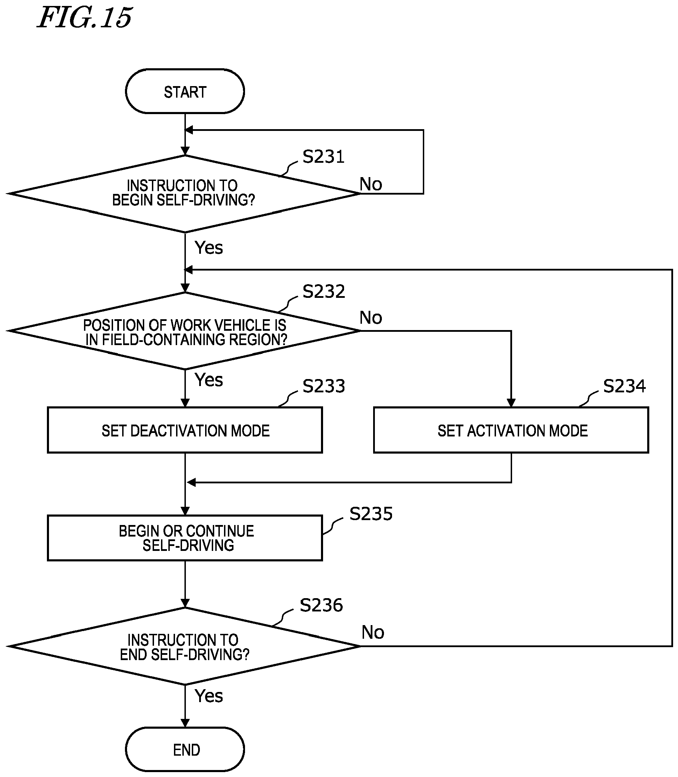

FIG. **15** is a flowchart showing an example operation of a controller **180** which performs different kinds of illumination control within a field and outside the field, respectively. First, the controller **180** in this example determines whether an instruction to begin self-driving has been given or not (step **S231).** Once the instruction to begin self-driving is given, the controller **180** determines whether the position of the work vehicle **100** is located in a first region that contains a field or in a second region that contains a public road, based on an environment map and a measurement value of the positioning device **110** (step **S232).** If the position of the work vehicle **100** is within the first region, the controller **180** is set to the deactivation mode. In the deactivation mode, the controller **180** deactivates the headlights **231** and the work lights **232.** If the position of the work vehicle **100** is within the second region, the controller **180** is set to the activation mode (step **S234).** In the activation mode, the controller **180** determines whether it is nighttime or not; if it is nighttime, the headlights **231** are activated and the work lights **232** are deactivated. The controller **180** begins self-driving in the mode that is set at step **S233** or **S234** (step **S235).** Thereafter, until receiving an instruction to end self-driving at step **S236,** the operation from steps **S232** to **S235** is repeated.

In the example of FIG. **15****,** as in the example of FIG. **11****,** the operation of detecting obstacles and halting the work vehicle **100,** as well as outputting an alert signal, may also be performed. As in the example shown in FIG. **12** or FIG. **13****,** the operation of restricting illumination within the field-containing region may be performed only at nighttime.

According to the example illustrated in FIG. **14** and FIG. **15****,** the controller **180** changes the illumination controlling method for performing self-driving at nighttime, depending on the position of the work vehicle **100.** On a public road, the controller **180** controls self-driving while keeping certain illumination devices **230** activated at an appropriate luminous intensity, so that an illumination performance as required by relevant law, etc., is satisfied. On the other hand, within a field, the controller **180** deactivates or attenuates the illumination devices **230,** so as to control self-driving with a minimum required amount of illumination. Under such illumination control, suitable illumination can be achieved both within and outside of the fields.

### Other Preferred Embodiments

Next, other preferred embodiments of the present disclosure will be described.

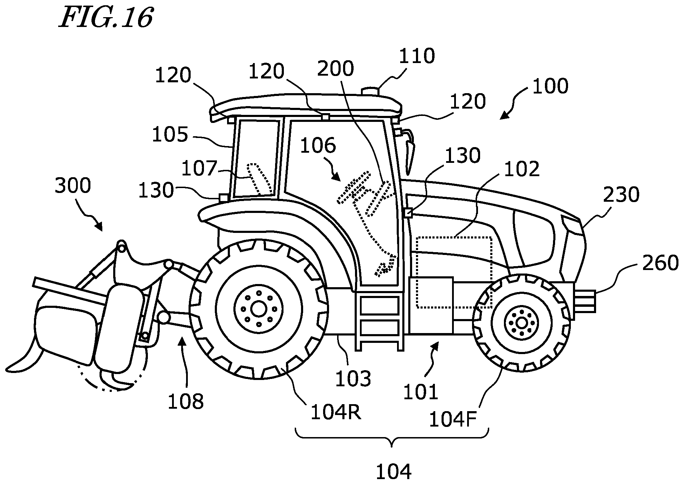

FIG. **16** is a diagram showing an example of a work vehicle **100** including a LiDAR sensor **260.** The LiDAR sensor **260** in this example is disposed at a lower portion of the front surface of the vehicle body **101.** The LiDAR sensor **260** may alternatively be disposed at other positions. While the work vehicle **100** is moving, the LiDAR sensor **260** repetitively outputs sensor data representing the distances and directions, or two-dimensional or three-dimensional coordinate values, of objects existing in the surrounding environment. The sensor data which is output from the LiDAR sensor **260** is processed by the controller **180.** By utilizing SLAM (Simultaneous Localization and Mapping) or other algorithms, for example, the controller **180** is able to perform processes such as generating an environment map based on the sensor data, localization by using an environment map, etc. The generation of an environment map may be performed by a computer, e.g., a cloud server, that is external to the work vehicle **100.** The LiDAR sensor **260** may also be utilized for obstacle detection.

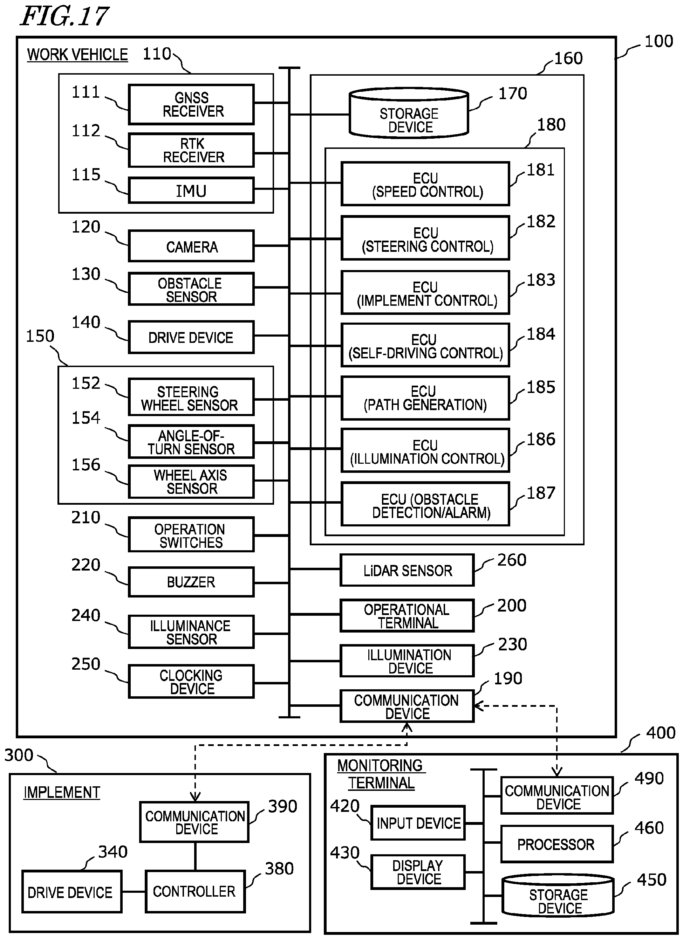

FIG. **17** is a block diagram showing an example configuration of a work vehicle **100** including a LiDAR sensor **260.** The controller **180** in this example estimates the position of the work vehicle **100** by considering not only a signal which is output from the positioning device **110** but also sensor data which is output from the LiDAR sensor **260.** Using the LiDAR sensor **260** allows for localization with a higher accuracy. Furthermore, based on the sensor data which is output from the LiDAR sensor **260,** the controller **180** is able to detect objects (e.g., other vehicles, pedestrians, etc.) that are located at relatively distant positions from the work vehicle **100.** By performing speed control and steering control so as to avoid the detected objects, the controller **180** achieves self-traveling on public roads.

Thus, providing the LiDAR sensor **260** allows self-driving within the fields and outside the fields to be performed more smoothly.

In each of the above preferred embodiments, the controller **180** of the work vehicle **100** performs generation of a target path and the control to cause the work vehicle **100** to travel along the target path. However, target path generation may be performed by a device that is distinct from the controller **180.** For example, an external computer, e.g., a server, that communicates with the work vehicle **100** may generate a target path.

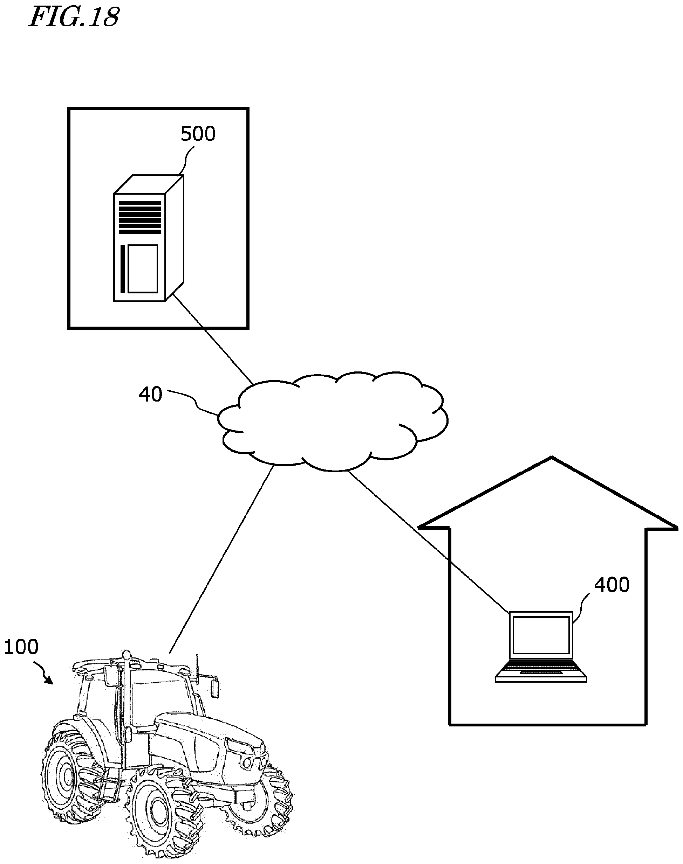

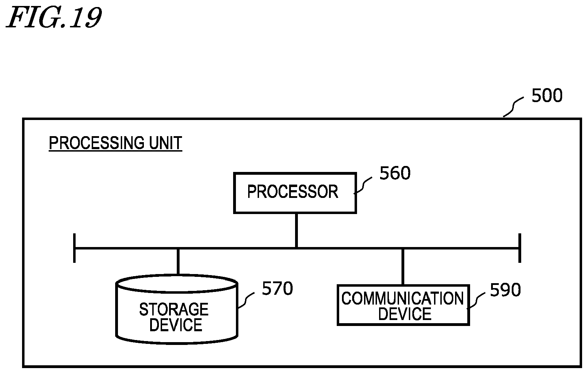

FIG. **18** is a diagram schematically showing the configuration of a system in which a processing unit **500** that communicates with the work vehicle **100** via the network **40** generates a target path. In this example, rather than the controller **180** of the work vehicle **100,** the external processing unit **500** generates a target path, and transmits this information to the work vehicle **100.** The processing unit **500** may be a computer such as a cloud server. FIG. **19** is a block diagram showing the configuration of the processing unit **500.** The processing unit **500** includes one or more processors **560,** a storage device **570,** and a communication device **590.** The storage device **570** includes a memory in which a computer program to be executed by the processor **560** is stored. The communication device **590** exchanges signals with the communication device **190** of the work vehicle **100** and with the monitoring terminal **400.** In this preferred embodiment, the work vehicle **100** may lack the ECU **185** for path generation purposes that is shown in FIG. **3****.** The processor **560** of the processing unit **500** may perform processes other than target path generation, e.g., generation and distribution of an environment map.

Although the work vehicle **100** according to each preferred embodiment described above is a tractor, the techniques according to each preferred embodiment are also applicable to vehicles other than tractors as well as to agricultural machines other than vehicles. For example, the techniques according to each preferred embodiment may also be applied to harvesters, rice transplanters, vehicles for crop management, vegetable transplanters, mowers, mobile robots for agriculture, or other agricultural machines.

A device for performing self-driving control and illumination control according to each of the above preferred embodiments can be mounted on an agricultural machine lacking such functions as an add-on. Such a device may be manufactured and sold independently from the agricultural machine. A computer program for use in such a device may also be manufactured and sold independently from the agricultural machine. The computer program may be provided in a form stored in a non-transitory computer-readable storage medium, for example. The computer program may also be provided through downloading via telecommunication lines (e.g., the Internet).

Thus, the present disclosure encompasses agricultural machines, controllers, methods, non-transitory computer-readable storage media, and computer programs as described in the following examples.

An agricultural machine to perform self-driving includes one or more illuminators to illuminate surroundings of the agricultural machine in a traveling direction thereof, and a controller to control self-driving while keeping at least one of the one or more illuminators deactivated at nighttime.

In the agricultural machine described above, when beginning to control self-driving while the at least one of the illuminators is activated, the controller is configured or programmed to deactivate the at least one of the illuminators.

In the agricultural machine described above, a switch is included to manually switch between activation and deactivation of the one or more illuminators, wherein irrespective of whether the switch is in an ON state or an OFF state, the controller is configured or programmed to deactivate the at least one of the illuminators when beginning self-driving.

In the agricultural machine described above, the one or more illuminators include one or more headlights, and the controller is configured or programmed to control self-driving while keeping the one or more headlights deactivated at nighttime.

In the agricultural machine described above, the one or more illuminators includes one or more work lights, and the controller is configured or programmed to control self-driving while keeping the one or more work lights deactivated at nighttime.

In the agricultural machine described above, an illuminance sensor is provided and the controller is configured or programmed to keep the at least one of the illuminators deactivated if an illuminance measured by the illuminance sensor is equal to or less than a threshold when self-driving is being controlled.

In the agricultural machine described above, a clock is provided and the controller is configured or programmed to keep the at least one of the illuminators deactivated if a point of time acquired from the clock is a point of time corresponding to nighttime when self-driving is being controlled.

In the agricultural machine described above, when controlling self-driving at nighttime, the controller is configured or programmed to determine whether a position measured by the position sensor is in a first region that includes a field or a second region that contains a public road, and when determining that the agricultural machine is in the first region, control self-driving in a deactivation mode of keeping the at least one of the illuminators deactivated, and when determining that the agricultural machine is in the second region, control self-driving in an activation mode of keeping the at least one of the illuminators activated.

In the agricultural machine described above, a sensor is provided to detect an obstacle, and if the sensor detects an obstacle when self-driving is being controlled at nighttime, the controller is configured or programmed to activate the at least one of the illuminators.

In the agricultural machine described above, the sensor includes an imager to image surroundings of the agricultural machine and a signal processing circuit to detect an obstacle based on image data generated by the imager, and if the signal processing circuit detects an obstacle when self-driving is being controlled at nighttime, the controller is configured or programmed to activate the at least one of the illuminators.

In the agricultural machine described above, a communicator is provided to communicate with a monitoring computer via a network, wherein the controller is configured or programmed to cause the communicator to transmit the image data to the monitoring computer while self-driving is being controlled, and transmit an alert signal to the monitoring computer when the signal processing circuit detects an obstacle.

A controller for an agricultural machine that includes one or more illuminators to illuminate surroundings of the agricultural machine in a traveling direction thereof, includes one or more processors, and a memory storing a computer program, wherein the computer program causes the one or more processors to deactivate at least one of the one or more illuminators at nighttime, and control self-driving of the agricultural machine while keeping the at least one of the illuminators deactivated.

A method to be executed by a computer for controlling an agricultural machine that includes one or more illuminators to illuminate surroundings of the agricultural machine in a traveling direction thereof, includes deactivating at least one of the one or more illuminators at nighttime, and controlling self-driving of the agricultural machine while keeping the at least one of the illuminators deactivated.

An agricultural machine to perform self-driving in a field includes an illumination system including one or more headlights, and a controller to control the illumination system, wherein when the agricultural machine is traveling via self-driving in the field at nighttime, the controller is configured or programmed to control the illumination system in a deactivation mode of keeping the one or more headlights deactivated.

In the agricultural machine described above, the illumination system further includes one or more work lights, and the controller is configured or programmed to keep the one or more headlights and the one or more work lights deactivated in the deactivation mode.

In the agricultural machine described above, the controller is configured or programmed to control the illumination system in the deactivation mode if an illuminance measured by the illuminance sensor is equal to or less than a threshold when the agricultural machine is traveling via self-driving in the field.

In the agricultural machine described above, the controller is configured or programmed to control the illumination system in the deactivation mode if a point of time acquired from a clock is a point of time corresponding to nighttime when the agricultural machine is traveling via self-driving in the field.

In the agricultural machine described above, while the agricultural machine is traveling via self-driving at nighttime, the controller is configured or programmed to determine whether the agricultural machine is in the field or not based on a position of the agricultural machine as identified by the position sensor, and when determining that the agricultural machine is in the field, control the illumination system in the deactivation mode.

In the agricultural machine described above, while the agricultural machine is traveling via self-driving at nighttime, the controller is configured or programmed to determine whether the agricultural machine is in a first region that includes the field or in a second region that includes a public road based on a position of the agricultural machine as identified by the position sensor, and when determining that the agricultural machine is in the first region, control the illumination system in the deactivation mode, and when determining that the agricultural machine is in the second region, control the illumination system in an activation mode of keeping the one or more headlights activated.

In the agricultural machine described above, the illumination system includes a plurality of illuminators including the one or more headlights, and in the deactivation mode, the controller is configured or programmed to lower a total optical power of the plurality of illuminators relative to that in the activation mode.

In the agricultural machine described above, the illumination system includes one or more work lights, and in the activation mode, the controller is configured or programmed to keep the one or more headlights activated and keep the one or more work lights deactivated.

In the agricultural machine described above, a sensor is provided to detect an obstacle, wherein if the sensor detects an obstacle when the agricultural machine is traveling via self-driving in the field at nighttime, the controller is configured or programmed to increase an optical power of at least one illuminator included in the illumination system.

In the agricultural machine described above, when the sensor detects an obstacle, the controller is configured or programmed to halt the agricultural machine or cause the agricultural machine to move along a path for avoiding the obstacle.

In the agricultural machine described above, the illumination system includes a plurality of illuminators including one or more headlights and if the sensor detects an obstacle when the agricultural machine is traveling via self-driving in the field at nighttime, the controller is configured or programmed to increase an optical power of at least one illuminator that is capable of illuminating the obstacle among the plurality of illuminators.

In the agricultural machine described above, the sensor includes a plurality of sensors that each detect an obstacle, and if one or more sensors among the plurality of sensors detect an obstacle or obstacles when the agricultural machine is traveling via self-driving in the field at nighttime, the controller is configured or programmed to increase an optical power or optical powers of one or more illuminators among the plurality of illuminators that are associated with the one or more sensors.

In the agricultural machine described above, the sensor includes an imager to image surroundings of the agricultural machine at nighttime and a signal processing circuit to detect an obstacle based on image data generated by the imager, and when the agricultural machine is traveling via self-driving in the field at nighttime, the controller is configured or programmed to control the illumination system in the deactivation mode while causing the imager to perform imaging.

In the agricultural machine described above, a communicator is provided to communicate with a monitoring computer via a network, wherein the controller is configured or programmed to cause the communicator to transmit the image data to the monitoring computer while the agricultural machine is traveling via self-driving in the field at nighttime, and transmit an alarm to the monitoring computer when the sensor detects an obstacle.

In the agricultural machine described above, another imager is provided to acquire an image based on visible light, wherein after increasing the optical power of the at least one illuminator upon detecting the obstacle, the controller is configured or programmed to cause the communicator to transmit image data generated by the other imager to the monitoring computer.

In the agricultural machine described above, wherein, while controlling the illumination system in the deactivation mode, the controller is configured or programmed to activate at least one illuminator included in the illumination system in response to a command for activation that is transmitted from the monitoring computer as a user manipulates the monitoring computer.

An agricultural machine to perform self-driving in a first region that includes a field and in a second region that includes a public road, includes an illumination system including one or more headlights, and a controller to control the illumination system, wherein the controller is configured or programmed to determine whether the agricultural machine is in the first region or in the second region based on a position of the agricultural machine as identified by a position sensor, and when the agricultural machine is traveling via self-driving in the first region at nighttime, control the illumination system in a first control mode, and when the agricultural machine is traveling via self-driving in the second region at nighttime, control the illumination system in a second control mode which is different from the first control mode, wherein the controller is configured or programmed to lower an optical power or optical powers of the one or more headlights in the first control mode relative to that in the second control mode.

A controller to control an agricultural machine that includes an illumination system including one or more headlights, includes one or more processors, and a memory storing a computer program, wherein the one or more processors execute the computer program to, when the agricultural machine is traveling via self-driving in the field at nighttime, control the illumination system in a deactivation mode of keeping the one or more headlights deactivated.

A controller to control an agricultural machine that includes an illumination system including one or more headlights, including one or more processors, and a memory storing a computer program, wherein the one or more processors execute the computer program to determine whether the agricultural machine is in the first region or in the second region based on a position of the agricultural machine as identified by a position sensor, and when the agricultural machine is traveling via self-driving in the first region at nighttime, control the illumination system in a first control mode, and when the agricultural machine is traveling via self-driving in the second region at nighttime, control the illumination system in a second control mode which is different from the first control mode, wherein an optical power or optical powers of the one or more headlights is lowered in the first control mode relative to that in the second control mode.

A method of controlling an agricultural machine that includes an illumination system including one or more headlights, includes causing the agricultural machine to travel via self-driving in the field at nighttime, and when the agricultural machine is traveling via self-driving in the field at nighttime, controlling the illumination system in a deactivation mode of keeping the one or more headlights deactivated.

A method of controlling an agricultural machine that includes an illumination system including one or more headlights, includes determining whether the agricultural machine is in the first region or in the second region based on a position of the agricultural machine as identified by a position sensor, when the agricultural machine is traveling via self-driving in the first region at nighttime, controlling the illumination system in a first control mode, when the agricultural machine is traveling via self-driving in the second region at nighttime, controlling the illumination system in a second control mode which is different from the first control mode, and lowering an optical power or optical powers of the one or more headlights in the first control mode relative to that in the second control mode.

A non-transitory computer-readable storage medium includes a computer program to cause a computer to control an agricultural machine that includes an illumination system including one or more headlights to cause the agricultural machine to travel via self-driving in the field at nighttime, and when the agricultural machine is traveling via self-driving in the field at nighttime, control the illumination system in a deactivation mode of keeping the one or more headlights deactivated.

A non-transitory computer-readable storage medium includes a computer program to cause a computer to control an agricultural machine that includes an illumination system including one or more headlights to determine whether the agricultural machine is in the first region or in the second region based on a position of the agricultural machine as identified by a position sensor, when the agricultural machine is traveling via self-driving in the first region at nighttime, control the illumination system in a first control mode, when the agricultural machine is traveling via self-driving in the second region at nighttime, control the illumination system in a second control mode which is different from the first control mode, and lower an optical power or optical powers of the one or more headlights in the first control mode relative to that in the second control mode.

The techniques according to various example preferred embodiments of the present disclosure are applicable to agricultural machines, such as tractors, harvesters, rice transplanters, vehicles for crop management, vegetable transplanters, mowers, seeders, spreaders, or agricultural robots, for example.

## Claims

1. A controller (180) configured for an agricultural machine (100) to perform self-driving, the agricultural machine (100) including one or more illuminators (230) configured to illuminate surroundings of the agricultural machine in a traveling direction thereof, and at least one of an illuminance sensor (240) or a clock (250), the controller comprising:
one or more processors (181, 182, 183, 184, 185, 186, 187); and
a memory (170)configured to store a computer program; wherein
the computer program is configured to cause the one or more processors to:
determine whether it is nighttime or not based on at least one of a signal output from the clock or a signal output from the illuminance sensor;
deactivate at least one of the one or more illuminators at nighttime; and
control self-driving of the agricultural machine while keeping the at least one of the illuminators deactivated.

2. An agricultural machine (100) to perform self-driving, comprising:
the controller (180) of claim 1;
the one or more illuminators (230); and
the at least one of the illuminance sensor (240) or the clock (250).

3. The agricultural machine (100) of claim 2, wherein, when beginning to control self-driving while the at least one of the illuminators (230) is activated, the controller (180) is configured or programmed to deactivate the at least one of the illuminators.

4. The agricultural machine (100) of claim 2 or 3, further comprising a switch (210) configured to manually switch between activation and deactivation of the one or more illuminators (230); wherein
irrespective of whether the switch is in an ON state or an OFF state, the controller (180) is configured or programmed to deactivate the at least one of the illuminators when beginning self-driving.

5. The agricultural machine (100) of any of claims 2 to 4, wherein
the one or more illuminators (230) include one or more headlights (231); and
the controller (180) is configured or programmed to control self-driving while keeping the one or more headlights deactivated at nighttime.

6. The agricultural machine (100) of any of claims 2 to 5, wherein
the one or more illuminators (230) includes one or more work lights (232); and
the controller (180) is configured or programmed to control self-driving while keeping the one or more work lights deactivated at nighttime.

7. The agricultural machine (100) of any of claims 2 to 6, comprising the illuminance sensor (240); wherein
the controller (180) is configured or programmed to keep the at least one of the illuminators (230) deactivated if an illuminance measured by the illuminance sensor is equal to or less than a threshold when self-driving is being controlled.

8. The agricultural machine (100) of any of claims 2 to 7, comprising the clock (250); wherein
the controller (180) is configured or programmed to keep the at least one of the illuminators (230) deactivated if a point of time acquired from the clock is a point of time corresponding to nighttime when self-driving is being controlled.

9. The agricultural machine (100) of any of claims 2 to 8, further comprising a position sensor (110); wherein
when controlling self-driving at nighttime, the controller (180) is configured or programmed to:
determine whether a position measured by the position sensor is in a first region that includes a field or a second region that includes a public road; and
when determining that the agricultural machine is in the first region, control self-driving in a deactivation mode of keeping the at least one of the illuminators (230) deactivated; and
when determining that the agricultural machine is in the second region, control self-driving in an activation mode of keeping the at least one of the illuminators activated.

10. The agricultural machine of any of claims 2 to 9, further comprising a sensor (120, 130) configured to detect an obstacle; wherein
if the sensor detects an obstacle when self-driving is being controlled at nighttime, the controller (180) is configured or programmed to activate the at least one of the illuminators (230).

11. The agricultural machine (100) of claim 10, wherein
the sensor (120, 130) includes an imager (120) to image surroundings of the agricultural machine and a signal processing circuit configured to detect an obstacle based on image data generated by the imager; and
if the signal processing circuit detects an obstacle when self-driving is being controlled at nighttime, the controller (180) is configured or programmed to activate the at least one of the illuminators (230).

12. The agricultural machine (100) of claim 11, further comprising a communicator (190) to communicate with a monitoring computer (400) via a network (40); wherein
the controller (180) is configured or programmed to cause the communicator to:
transmit the image data to the monitoring computer while self-driving is being controlled; and
transmit an alert signal to the monitoring computer when the signal processing circuit detects an obstacle.

13. A method to be executed by a computer (180) configured for controlling an agricultural machine (100) that includes one or more illuminators (230) to illuminate surroundings of the agricultural machine in a traveling direction thereof, and at least one of an illuminance sensor (240) or a clock (250), the method comprising:
determining whether it is nighttime or not based on at least one of a signal output from the clock or a signal output from the illuminance sensor;
deactivating at least one of the one or more illuminators at nighttime; and
controlling self-driving of the agricultural machine while keeping the at least one of the illuminators deactivated.

## Patentansprüche

1. Steuerung (180), die für eine Landmaschine (100) konfiguriert ist, um Selbstfahren durchzuführen, wobei die Landmaschine eine oder mehrere Beleuchtungseinrichtungen (230), die konfiguriert sind, um Umgebungen der Landmaschine in einer Fahrtrichtung davon zu beleuchten, und mindestens eines von einem Beleuchtungsstärkesensor (240) oder einer Uhr (250) beinhaltet, die Steuerung umfassend:
einen oder mehrere Prozessoren (181, 182, 183, 184, 185, 186, 187); und
einen Speicher (170), der konfiguriert ist, um ein Computerprogramm zu speichern; wobei
das Computerprogramm konfiguriert ist, um den einen oder die mehreren Prozessoren zu Folgendem zu veranlassen:
Bestimmen, ob es Nachtzeit ist, basierend auf mindestens einem von einem Signalausgang von der Uhr oder einem Signalausgang von dem Beleuchtungsstärkesensor;
Deaktivieren mindestens einer von der einen oder den mehreren Beleuchtungseinrichtungen bei Nachtzeit; und
Steuern eines Selbstfahrens der Landmaschine, während die mindestens eine der Beleuchtungseinrichtungen deaktiviert gehalten wird.

2. Landmaschine (100), zum Durchführen eines Selbstfahrens, umfassend:
die Steuerung (180) nach Anspruch 1;
die eine oder die mehreren Beleuchtungseinrichtungen (230); und
das mindestens eine von dem Beleuchtungsstärkesensor (240) oder der Uhr (250).

3. Landmaschine (100) nach Anspruch 2, wobei die Steuerung (180) bei Beginn eines Steuerns eines Selbstfahrens, während die mindestens eine der Beleuchtungseinrichtungen (230) aktiviert ist, konfiguriert oder programmiert ist, um die mindestens eine der Beleuchtungseinrichtungen zu deaktivieren.

4. Landmaschine (100) nach Anspruch 2 oder 3, ferner umfassend einen Schalter (210), der konfiguriert ist, um manuell zwischen einer Aktivierung und Deaktivierung der einen oder der mehreren Beleuchtungseinrichtungen (230) umzuschalten; wobei
unabhängig davon, ob der Schalter in einem EIN- oder AUS-Zustand ist, die Steuerung (180) konfiguriert oder programmiert ist, um die mindestens eine der Beleuchtungseinrichtungen bei Beginn eines Selbstfahrens zu deaktivieren.

5. Landmaschine (100) nach einem der Ansprüche 2 bis 4, wobei
die eine oder die mehreren Beleuchtungseinrichtungen (230) einen oder mehrere Scheinwerfer (231) beinhalten; und
die Steuerung (180) konfiguriert oder programmiert ist, um ein Selbstfahren zu steuern, während der eine oder die mehreren Scheinwerfer bei Nachtzeit deaktiviert bleiben.

6. Landmaschine (100) nach einem der Ansprüche 2 bis 5, wobei
die eine oder die mehreren Beleuchtungseinrichtungen (230) eine oder mehrere Arbeitsleuchten (232) beinhalten; und
die Steuerung (180) konfiguriert oder programmiert ist, um ein Selbstfahren zu steuern, während der eine oder die mehreren Arbeitsleuchten bei Nachtzeit deaktiviert bleiben.

7. Landmaschine (100) nach einem der Ansprüche 2 bis 6, umfassend den Beleuchtungsstärkesensor (240); wobei
die Steuerung (180) konfiguriert oder programmiert ist, um die mindestens eine der Beleuchtungseinrichtungen (230) deaktiviert zu halten, wenn eine von dem Beleuchtungsstärkesensor gemessene Beleuchtungsstärke gleich wie oder kleiner als ein Schwellenwert ist, wenn ein Selbstfahren gesteuert wird.

8. Landmaschine (100) nach einem der Ansprüche 2 bis 7, umfassend die Uhr (250); wobei
die Steuerung (180) konfiguriert oder programmiert ist, um die mindestens eine der Beleuchtungseinrichtungen (230) deaktiviert zu halten, wenn ein von der Uhr erfasster Zeitpunkt ein Zeitpunkt ist, der einer Nachtzeit entspricht, wenn ein Selbstfahren gesteuert wird.

9. Landmaschine (100) nach einem der Ansprüche 2 bis 8, ferner umfassend einen Positionssensor (110); wobei
bei einem Steuern eines Selbstfahrens bei Nachtzeit die Steuerung (180) zu Folgendem konfiguriert oder programmiert ist:
Bestimmen, ob eine von dem Positionssensor gemessene Position in einem ersten Bereich, der ein Feld beinhaltet, oder in einem zweiten Bereich, der eine öffentliche Straße beinhaltet, ist; und
bei einem Bestimmen, dass die Landmaschine in dem ersten Bereich ist, Steuern eines Selbstfahrens in einem Deaktivierungsmodus, in dem die mindestens eine der Beleuchtungseinrichtungen (230) deaktiviert gehalten wird; und
bei einem Bestimmen, dass die Landmaschine in der dem zweiten Bereich ist, Steuern eines Selbstfahrens in einem Aktivierungsmodus, in dem die mindestens eine der Beleuchtungseinrichtungen aktiviert gehalten wird.

10. Landmaschine nach einem der Ansprüche 2 bis 9, ferner umfassend einen Sensor (120, 130), der konfiguriert ist, um ein Hindernis zu erfassen; wobei
wenn der Sensor ein Hindernis erkennt, wenn ein Selbstfahren bei Nachtzeit gesteuert wird, die Steuerung (180) konfiguriert oder programmiert ist, um die mindestens eine der Beleuchtungseinrichtungen (230) zu aktivieren.

11. Landmaschine (100) nach Anspruch 10, wobei
der Sensor (120, 130) einen Bildgeber (120) zum Abbilden von Umgebungen der Landmaschine und eine Signalverarbeitungsschaltung beinhaltet, die konfiguriert ist, um basierend auf Bilddaten, die durch den Bildgeber erzeugt werden, ein Hindernis zu erfassen; und
wenn die Signalverarbeitungsschaltung ein Hindernis erkennt, wenn ein Selbstfahren bei Nachtzeit gesteuert wird, die Steuerung (180) konfiguriert oder programmiert ist, um die mindestens eine der Beleuchtungseinrichtungen (230) zu aktivieren.

12. Landmaschine (100) nach Anspruch 11, ferner umfassend einen Kommunikator (190) zum Kommunizieren mit einem überwachenden Computer (400) über ein Netzwerk (40), wobei
die Steuerung (180) konfiguriert oder programmiert ist, um den Kommunikator zu Folgendem zu veranlassen:
Übertragen der Bilddaten an den überwachenden Computer, während ein Selbstfahren gesteuert wird; und
Übertragen eines Alarmsignals an den überwachenden Computer, wenn die Signalverarbeitungsschaltung ein Hindernis erkennt.

13. Verfahren, das von einem Computer (180) auszuführen ist, der zum Steuern einer Landmaschine (100) konfiguriert ist, die eine oder mehrere Beleuchtungseinrichtungen (230) zum Beleuchten von Umgebungen der Landmaschine in einer Fahrtrichtung davon und mindestens eines von einem Beleuchtungsstärkesensor (240) oder einer Uhr (250) beinhaltet, das Verfahren umfassend:
Bestimmen, ob es Nachtzeit ist, basierend auf mindestens einem von einem Signalausgang von der Uhr oder einem Signalausgang von dem Beleuchtungsstärkesensor;
Deaktivieren mindestens einer von der einen oder den mehreren Beleuchtungseinrichtungen bei Nachtzeit; und
Steuerung eines Selbstfahrens der Landmaschine, während die mindestens eine der Beleuchtungseinrichtungen deaktiviert gehalten wird.

## Revendications

1. Contrôleur (180) configuré de manière à permettre à une machine agricole (100) de mettre en oeuvre une conduite autonome, la machine agricole (100) incluant un ou plusieurs illuminateurs (230) configurés de manière à éclairer les environs de la machine agricole dans une direction de déplacement de celle-ci, et au moins un capteur d'éclairement (240) ou une horloge (250), le contrôleur comprenant :
un ou plusieurs processeurs (181, 182, 183, 184, 185, 186, 187) ; et
une mémoire (170) configurée de manière à stocker un programme informatique ; dans lequel
le programme informatique est configuré de manière à amener ledit un ou lesdits plusieurs processeurs à :
déterminer s'il fait nuit ou non sur la base d'au moins l'un parmi un signal fourni en sortie par l'horloge et un signal fourni en sortie par le capteur d'éclairement ;
désactiver au moins l'un dudit un ou desdits plusieurs illuminateurs lorsqu'il fait nuit ; et
commander la conduite autonome de la machine agricole tout en maintenant désactivé ledit au moins un des illuminateurs.

2. Machine agricole (100) destinée à mettre en oeuvre une conduite autonome, comprenant :
le contrôleur (180) selon la revendication 1 ;
ledit un ou lesdits plusieurs illuminateurs (230) ; et
ledit au moins un élément parmi le capteur d'éclairement (240) et l'horloge (250).

3. Machine agricole (100) selon la revendication 2, dans laquelle, lorsqu'il commence à commander la conduite autonome tandis que ledit au moins des illuminateurs (230) est activé, le contrôleur (180) est configuré ou programmé de manière à désactiver ledit au moins un des illuminateurs.

4. Machine agricole (100) selon la revendication 2 ou 3, comprenant en outre un commutateur (210) configuré de manière à commuter manuellement entre l'activation et la désactivation dudit un ou desdits plusieurs illuminateurs (230) ; dans laquelle,
indépendamment du fait que le commutateur est dans un état de marche ou dans un état d'arrêt, le contrôleur (180) est configuré ou programmé de manière à désactiver ledit au moins un des illuminateurs au début de la conduite autonome.

5. Machine agricole (100) selon l'une quelconque des revendications 2 à 4, dans laquelle
ledit un ou lesdits plusieurs illuminateurs (230) incluent un ou plusieurs phares (231) ; et
le contrôleur (180) est configuré ou programmé de manière à commander la conduite autonome tout en maintenant désactivé(s) ledit un ou lesdits plusieurs phares lorsqu'il fait nuit.

6. Machine agricole (100) selon l'une quelconque des revendications 2 à 5, dans laquelle
ledit un ou lesdits plusieurs illuminateurs (230) incluent une ou plusieurs lampes de travail (232) ; et
le contrôleur (180) est configuré ou programmé de manière à commander la conduite autonome tout en maintenant désactivée(s) ladite une ou lesdites plusieurs lampes de travail lorsqu'il fait nuit.

7. Machine agricole (100) selon l'une quelconque des revendications 2 à 6, comprenant le capteur d'éclairement (240) ; dans laquelle
le contrôleur (180) est configuré ou programmé de manière à maintenir désactivé ledit au moins un des illuminateurs (230) si un éclairement mesuré par le capteur d'éclairement est égal ou inférieur à un seuil lorsque la conduite autonome est commandée.

8. Machine agricole (100) selon l'une quelconque des revendications 2 à 7, comprenant l'horloge (250) ; dans laquelle
le contrôleur (180) est configuré ou programmé de manière à maintenir désactivé ledit au moins un des illuminateurs (230) si un point temporel acquis à partir de l'horloge est un point temporel correspondant à la nuit lorsque la conduite autonome est commandée.

9. Machine agricole (100) selon l'une quelconque des revendications 2 à 8, comprenant en outre un capteur de position (110) ; dans laquelle
lors de la commande de la conduite autonome lorsqu'il fait nuit, le contrôleur (180) est configuré ou programmé de manière à :
déterminer si une position mesurée par le capteur de position est située dans une première région qui inclut un champ ou dans une deuxième région qui inclut une voie publique ; et
lorsqu'il est déterminé que la machine agricole se situe dans la première région, commander la conduite autonome dans un mode de désactivation destiné à maintenir désactivé ledit au moins un des illuminateurs (230) ; et
lorsqu'il est déterminé que la machine agricole se situe dans la deuxième région, commander la conduite autonome dans un mode d'activation destiné à maintenir activé ledit au moins un des illuminateurs.

10. Machine agricole selon l'une quelconque des revendications 2 à 9, comprenant en outre un capteur (120, 130) configuré de manière à détecter un obstacle ; dans laquelle
si le capteur détecte un obstacle lorsque la conduite autonome est commandée lorsqu'il fait nuit, le contrôleur (180) est configuré ou programmé de manière à activer ledit au moins un des illuminateurs (230).

11. Machine agricole (100) selon la revendication 10, dans laquelle
le capteur (120, 130) inclut un imageur (120) destiné à imager les environs de la machine agricole, et un circuit de traitement de signal configuré de manière à détecter un obstacle sur la base de données d'image générées par l'imageur ; et
si le circuit de traitement de signal détecte un obstacle lorsque la conduite autonome est commandée lorsqu'il fait nuit, le contrôleur (180) est configuré ou programmé de manière à activer ledit au moins un des illuminateurs (230).

12. Machine agricole (100) selon la revendication 11, comprenant en outre un communicateur (190) destiné à communiquer avec un ordinateur de surveillance (400) par l'intermédiaire d'un réseau (40) ; dans laquelle
le contrôleur (180) est configuré ou programmé de manière à amener le communicateur à :
transmettre les données d'image à l'ordinateur de surveillance pendant que la conduite autonome est commandée ; et
transmettre un signal d'alerte à l'ordinateur de surveillance lorsque le circuit de traitement de signal détecte un obstacle.

13. Procédé devant être exécuté par un ordinateur (180) configuré de manière à commander une machine agricole (100) qui inclut un ou plusieurs illuminateurs (230) destinés à éclairer les environs de la machine agricole dans la direction de déplacement de celle-ci, et au moins l'un parmi un capteur d'éclairement (240) ou une horloge (250), le procédé comprenant le fait de :
déterminer s'il fait nuit ou non sur la base d'au moins l'un parmi un signal fourni en sortie par l'horloge ou un signal fourni en sortie par le capteur d'éclairement ;
désactiver au moins l'un dudit un ou desdits plusieurs illuminateurs lorsqu'il fait nuit ; et
commander la conduite autonome de la machine agricole tout en maintenant désactivé ledit au moins un des illuminateurs.
